# EUROPEAN PATENT SPECIFICATION

(11) **EP 4 474 231 B1**
(45) Date of publication and mention of the grant of the patent: **01.04.2026**
(21) Application number: 23177993.5
(22) Date of filing: 07.06.2023
(51) Int. Cl.: B60T 7/12

(54) **BRAKING SYSTEM FOR HEAVY DUTY VEHICLE**
BREMSSYSTEM FÜR SCHWERLASTFAHRZEUG
SYSTÈME DE FREINAGE POUR VÉHICULE POIDS-LOURD

(43) Date of publication of application: 11.12.2024
(73) Proprietor: VOLVO TRUCK CORPORATION, 405 08 Göteborg (SE)
(72) Inventor: GAILLAUD, Pierig, 69003 LYON (FR); MONNIER, Martin, 69600 OULLINS (FR)
(74) Representative: Kransell & Wennborg KB

(56) References cited:
- EP-A1- 3 150 450
- EP-A1- 4 183 645
- US-A- 5 036 961
- US-A1- 2009 236 904
- US-A1- 2022 402 471
- US-A1- 2023 264 669
- US-B2- 11 370 404
- US-B2- 8 708 430

## Description

### TECHNICAL FIELD

The invention relates generally to a braking system for a heavy duty vehicle. In particular aspects, the invention relates to a braking system configured for automatic application of a parking brake in the case of malfunction of an electronic parking brake system of the vehicle. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

Various vehicles, in particular various heavy duty vehicles, use pressurized air for the operation of the braking system. In such a vehicle equipped with an electronic parking brake system there may be no satisfactory way to apply the parking brake in the event of malfunction of the electronic parking brake system.

It would be desirable to provide for improved performance of a braking system comprising an electronic parking brake system, in particular enabling improved application of the parking brake in the event of malfunction of the electronic parking brake system.

US 2009/236904 A1 relates to pneumatic brake system for a heavy duty vehicle is. The heavy duty vehicle has at least one source of pressurized air for pressurizing the brake system, at least one spring brake chamber including a spring brake assembly, and at least one service brake chamber including a service brake assembly. The brake system includes a first control valve, a second control valve and a work brake system. The first control valve is in communication with the source of pressurized air. The first control valve delivers pressurized air to the spring brake chamber and exhausts pressurized air to atmosphere to activate the spring brake assembly when brake system pressure is reduced to a predetermined low trip brake system pressure. The second control valve is in communication with the source of pressurized air and selectively delivers pressurized air to the service brake chamber for application of the service brake assembly. The work brake system is in communication with the source of pressurized air, the first control valve, and the second control valve. The work brake system is operably dependent on a predetermined high trip brake system pressure and a predetermined reset brake system pressure. Upon actuation of the work brake system, when brake system pressure is greater than the predetermined high trip pressure, the work brake system is configured to deliver a pneumatic control signal to the second control valve to activate the service brake assembly. When brake system pressure is less than the predetermined high trip pressure, the work brake system is configured to deliver a pneumatic spring brake signal to the first control valve to activate the spring brake assembly and remove the pneumatic control signal to the second control valve. The delivery of the pneumatic control signal to the second control valve via the work brake system is prevented until brake system pressure is greater than the predetermined reset pressure.

US 2022/402471 A1 relates to a brake system for a utility vehicle including: an electronic brake controller unit, a pneumatic parking brake circuit with at least one spring energy cylinder, a parking brake valve to control a parking brake pressure in the parking brake circuit, and at least one 3/3-way valve arranged in a pneumatic line of the parking brake circuit between the parking brake valve and at least one of the spring energy cylinders. The 3/3-way valve is actuable by the electronic brake control unit, and is configured to ventilate the pneumatic line between the 3/3-way valve and at least one of the spring energy cylinders to a predefined pressure, so as to cause the at least one of the spring energy cylinders to allow a brake, which is assigned to the spring energy cylinder, to pass into engagement.

US 11 370 404 B2 relates to an electronically controllable braking system for a commercial vehicle, including a service brake system having a front axle brake circuit with a front axle modulator, a rear axle brake circuit, and a central control module. The central control module is configured to implement a braking specification via the front axle brake circuit and the rear axle brake circuit. A parking brake module that is configured, in the event of a defect in the central control module, to process the braking requirement and to output a rear axle redundancy brake pressure to spring-brake parts for the redundant implementation of the braking specification. It is further provided that the front axle modulator is configured to process the braking specification and to output a front axle redundancy brake pressure to the front axle brakes for the further redundant implementation of the braking specification.

US 8 708 430 B2 relates to a pneumatic vehicle brake system including first and second groups of wheel brakes belonging, respectively, to first and second brake circuits having first and second compressed air storage tanks for providing first and second stored pressures. At least one first circuit brake cylinder is a combined spring-store/diaphragm cylinder with a spring store part for providing a parking brake and a diaphragm part for providing a service brake. If the first circuit fails, the spring store part is deaerated to engage the parking brake. A pressure sensor for measuring the first stored pressure is connected to a control unit that controls a modulator for aerating and deaerating the spring store part. The control unit generates a signal for an electrically actuatable modulator solenoid valve if the value measured by the sensor falls below a minimum value, such that the spring store part can be aerated and deaerated via the valve.

### SUMMARY

According to a first aspect of the invention, it is provided a braking system for a heavy duty vehicle, comprising: an air reservoir arrangement for storing pressurized air for operation of the braking system; at least one first air brake chamber configured to engage a service brake of a first wheel of the vehicle when an air pressure inside the first air brake chamber is higher than a predefined first service brake threshold pressure; at least one first flow control device connected to the air reservoir arrangement via a first fluid conduit and connected to the first air brake chamber via a second fluid conduit; at least one second air brake chamber configured to engage a service brake of a second wheel of the vehicle when an air pressure inside the second air brake chamber is higher than a predefined second service brake threshold pressure; at least one second flow control device connected to the air reservoir arrangement via a third fluid conduit and connected to the second air brake chamber via a fourth fluid conduit; at least one third flow control device connected to the first flow control device via the second fluid conduit, and to the first air brake chamber via a fifth fluid conduit; a parking brake sub-system connected to the air reservoir arrangement and configured to be controlled by an electronic parking brake system, and to automatically apply at least one parking brake to at least one wheel of the vehicle when an air pressure provided by the air reservoir arrangement falls below a predefined parking brake threshold pressure; and a braking system control unit coupled to first flow control device, the second flow control device, and the third flow control device, the braking system control unit being configured to control, in response to a set of indications including an indication of malfunction of the electronic parking brake system, an indication of a parking brake demand, and an indication that the vehicle is stationary, the third flow control device to prevent the pressure inside the first air brake chamber to go below the first service brake threshold pressure, and each of the first flow control device and the second flow control device to allow air from the air reservoir arrangement to be discharged from the braking system, until the pressure provided by the air reservoir arrangement has fallen below the predefined parking brake threshold pressure. The first aspect of the invention may seek to achieve safe application of the parking brake in the event of malfunction of the electronic parking brake system. A technical benefit may include to provide a braking system that does not require other driver intervention than an indication that application of the parking brake is requested. The braking system according to the invention may not require interaction with a human driver, but may be operated by an autonomous driving system, for example. Additionally, the braking system according to the invention may substantially prevent the truck from moving during the application of the parking brake.

In the present aspect, the parking brake sub-system is connected to the air reservoir arrangement and configured to be controlled by the electronic parking brake system. The parking brake subsystem is further configured to automatically apply at least one parking brake to at least one wheel of the vehicle when an air pressure provided by the air reservoir arrangement falls below a predefined parking brake threshold pressure. In the present aspect, the at least one third flow control device may be controlled to prevent the pressure inside the at least one first air brake chamber to go below the first service brake threshold pressure, while the at least one first flow control device and the at least one second flow control device are controlled to allow air from the air reservoir arrangement to be discharged. Hereby, the pressure provided by the air reservoir arrangement can be brought down to below the predefined parking brake threshold pressure, while maintaining the service brake of the at least one first wheel engaged. When the second flow control device is controlled to allow air from the air reservoir arrangement to be discharged, the air pressure inside the second air brake chamber may become lower than the second service brake threshold pressure, thereby releasing the service brake of the at least one second wheel of the vehicle. The vehicle will, however, remain stationary due to the control of the at least one third flow control device.

In some examples, including in at least one preferred example, optionally the first flow control device may be controllable between a first state in which it allows flow of air from the air reservoir arrangement into the second fluid conduit, and a second state in which it allows air from the second fluid conduit to be discharged from the braking system; the second flow control device may be controllable between a first state in which it allows flow of air from the air reservoir arrangement into the fourth fluid conduit, and a second state in which it allows air from the fourth fluid conduit to be discharged from the braking system; and the braking system control unit may be configured to control: the first flow control device to alternate between its first state and its second state; and the second flow control device to alternate between its first state and its second state, thereby allowing air from the air reservoir arrangement to be discharged from the braking system. A technical benefit may include that the first flow control device(s) and/or the second flow control device(s) need not be dedicated flow control devices arranged and configured solely for controllable reduction of the air pressure provided by the air reservoir arrangement, but that the first flow control device(s) and/or the second flow control device(s) may be the same flow control devices that would be used to control operation of the service brakes during normal operation of the vehicle.

In some examples, including in at least one preferred example, optionally the braking system control unit may be configured to control the second flow control device to alternate between its first state and its second state with an increasing alternation frequency. A technical benefit of increasing the alternation frequency from a relatively low first frequency in the beginning of the process of controllably allowing air from the air reservoir arrangement to be discharged to a relatively high second frequency, higher than the first frequency, at the end of the discharging process may include that the time to reaching the parking brake threshold pressure may be reduced, whereby the time until application of the parking brake can be reduced.

In some examples, including in at least one preferred example, optionally the air reservoir arrangement may comprise at least one first air tank connected to the first flow control device via the first fluid conduit; and at least one second air tank connected to the second flow control device via the third fluid conduit. A technical benefit may include the redundancy provided by at least two air tanks.

In some examples, including in at least one preferred example, optionally the braking system may comprise at least one fourth flow control device connected to the first air tank, to the second air tank, and to the parking brake sub-system, the fourth flow control device being configured to provide to the parking brake sub-system a highest air pressure of a first air pressure provided by the first air tank and a second air pressure provided by the second air tank.

In some examples, including in at least one preferred example, optionally the braking system may comprise at least one fifth flow control device arranged to control a flow of air between the first air tank and the second air tank, the fifth flow control device being configured to prevent flow of air between the first air tank and the second air tank in response to at least one of a first air pressure provided by the first air tank and a second air pressure provided by the second air tank becoming lower than a predefined air tank pressure.

The braking system according to various examples or combinations of examples may advantageously be included in a vehicle, further comprising vehicle wheels, where the braking system is arranged to brake at least one of the vehicle wheels.

According to a second aspect of the invention, it is provided a method of operating a braking system for a heavy duty vehicle, the braking system comprising an air reservoir arrangement for storing pressurized air for operation of the braking system; at least one first air brake chamber configured to engage a service brake of a first wheel of the vehicle when an air pressure inside the first air brake chamber is higher than a predefined first service brake threshold pressure; at least one first flow control device connected to the air reservoir arrangement via a first fluid conduit and connected to the first air brake chamber via a second fluid conduit; at least one second air brake chamber configured to engage a service brake of a second wheel of the vehicle when an air pressure inside the second air brake chamber is higher than a predefined second service brake threshold pressure; at least one second flow control device connected to the air reservoir arrangement via a third fluid conduit and connected to the second air brake chamber via a fourth fluid conduit; at least one third flow control device connected to the first flow control device via the second fluid conduit, and to the first air brake chamber via a fifth fluid conduit; a parking brake sub-system connected to the air reservoir arrangement and configured to be controlled by an electronic parking brake system, and to automatically apply at least one parking brake to at least one wheel of the vehicle when an air pressure provided by the air reservoir arrangement falls below a predefined parking brake threshold pressure; and a braking system control unit coupled to first flow control device, the second flow control device, and the third flow control device, the method comprising: controlling, by the braking system control unit, in response to a set of indications including an indication of malfunction of the electronic parking brake system, an indication of a parking brake demand, and an indication that the vehicle is stationary, the third flow control device to prevent the pressure inside the first air brake chamber to go below the first service brake threshold pressure, and each of the first flow control device and the second flow control device to allow air from the air reservoir arrangement to be discharged from the braking system, until the pressure provided by the air reservoir arrangement has fallen below the predefined parking brake threshold pressure. The second aspect of the invention may seek to achieve safe application of the parking brake in the event of malfunction of the electronic parking brake system. A technical benefit may include to provide a method of operating a braking system that does not require other driver intervention than an indication that application of the parking brake is requested. The method according to the invention may not require interaction with a human driver, but may be at least partly carried out by an autonomous driving system, for example. Additionally, the method according to the invention may substantially prevent the truck from moving during the application of the parking brake.

In the present aspect, the pressure provided by the air reservoir arrangement can be brought down to below the predefined parking brake threshold pressure, while maintaining the service brake of the at least one first wheel engaged. When the second flow control device is controlled to allow air from the air reservoir arrangement to be discharged, the air pressure inside the second air brake chamber may become lower than the second service brake threshold pressure, thereby releasing the service brake of the at least one second wheel of the vehicle. The vehicle will, however, remain stationary due to the control of the at least one third flow control device.

According to a third aspect of the invention, it is provided a braking system for a heavy duty vehicle, comprising: an air reservoir arrangement for storing pressurized air for operation of the braking system; a first air brake chamber configured to engage a service brake of a first wheel of the vehicle when an air pressure inside the first air brake chamber is higher than a predefined first service brake threshold pressure; a first flow control device connected to the air reservoir arrangement via a first fluid conduit and connected to the first air brake chamber via a second fluid conduit, the first pressure modulator being controllable between a first state in which it allows flow of air from the air reservoir arrangement into the second fluid conduit, and a second state in which it allows air from the second fluid conduit to be discharged from the braking system; a second air brake chamber configured to engage a service brake of a second wheel of the vehicle when an air pressure inside the second air brake chamber is higher than a predefined second service brake threshold pressure; a second flow control device connected to the air reservoir arrangement via a third fluid conduit and connected to the second air brake chamber via a fourth fluid conduit, the second pressure modulator being controllable between a first state in which it allows flow of air from the air reservoir arrangement into the fourth fluid conduit, and a second state in which it allows air from the fourth fluid conduit to be discharged from the braking system; a parking brake sub-system connected to the air reservoir arrangement and configured to be controlled by an electronic parking brake system, and to automatically apply a parking brake to at least one wheel of the vehicle when an air pressure provided by the air reservoir arrangement falls below a predefined parking brake threshold pressure; and a braking system control unit coupled to first flow control device, the second flow control device, and the third flow control device, the braking system control unit being configured to control, in response to a set of indications including an indication of malfunction of the electronic parking brake system, an indication of a parking brake demand, and an indication that the vehicle is stationary: the first flow control device to alternate between its first state and its second state, in such a way that the second flow control device is in its second state only when the first flow control device is in its first state; and the second flow control device to alternate between its first state and its second state, in such a way that the second flow control device is in its second state only when the first flow control device is in its first state, until the pressure provided by the air reservoir arrangement has fallen below the predefined parking brake threshold pressure. The third aspect of the invention may seek to achieve safe application of the parking brake in the event of malfunction of the electronic parking brake system. A technical benefit may include to provide a braking system that does not require other driver intervention than an indication that application of the parking brake is requested. The braking system according to the invention may not require interaction with a human driver, but may be operated by an autonomous driving system, for example. Additionally, the braking system according to the invention may substantially prevent the truck from moving during the application of the parking brake.

In the present aspect, the parking brake sub-system is connected to the air reservoir arrangement and configured to be controlled by the electronic parking brake system. The parking brake subsystem is further configured to automatically apply at least one parking brake to at least one wheel of the vehicle when an air pressure provided by the air reservoir arrangement falls below a predefined parking brake threshold pressure. In the present aspect, there is no need for the third flow control device of the braking system according to the first aspect, because the at least one first flow control device and the at least one second flow control device are controlled to alternate between their respective first and second states with such a timing that there is always at least one wheel that is braked by its service brake, in accordance with the state of the first or second flow control device configured to control flow of pressurized air to the air brake chamber of the service brake. Hereby, the pressure provided by the air reservoir arrangement can be brought down to below the predefined parking brake threshold pressure, while maintaining the service brake of at least one wheel (first wheel and second wheel alternatingly) engaged.

In some examples, including in at least one preferred example, optionally the braking system control unit may be configured to control the second flow control device to alternate between its first state and its second state with an increasing alternation frequency. A technical benefit of increasing the alternation frequency from a relatively low first frequency in the beginning of the process of controllably allowing air from the air reservoir arrangement to be discharged to a relatively high second frequency, higher than the first frequency, at the end of the discharging process may include that the time to reaching the parking brake threshold pressure may be reduced, whereby the time until application of the parking brake can be reduced.

In some examples, including in at least one preferred example, optionally the air reservoir arrangement may comprise at least one first air tank connected to the first flow control device via the first fluid conduit; and at least one second air tank connected to the second flow control device via the third fluid conduit. A technical benefit may include the redundancy provided by at least two air tanks.

In some examples, including in at least one preferred example, optionally the braking system may comprise at least one fourth flow control device connected to the first air tank, to the second air tank, and to the parking brake sub-system, the fourth flow control device being configured to provide to the parking brake sub-system a highest air pressure of a first air pressure provided by the first air tank and a second air pressure provided by the second air tank.

In some examples, including in at least one preferred example, optionally the braking system may comprise at least one fifth flow control device arranged to control a flow of air between the first air tank and the second air tank, the fifth flow control device being configured to prevent flow of air between the first air tank and the second air tank in response to at least one of a first air pressure provided by the first air tank and a second air pressure provided by the second air tank becoming lower than a predefined air tank pressure.

The braking system according to various examples or combinations of examples may advantageously be included in a vehicle, further comprising vehicle wheels, where the braking system is arranged to brake at least one of the vehicle wheels.

According to a fourth aspect of the invention, it is provided a method of operating a braking system for a heavy duty vehicle, the braking system comprising an air reservoir arrangement for storing pressurized air for operation of the braking system; at least one first air brake chamber configured to engage a service brake of a first wheel of the vehicle when an air pressure inside the first air brake chamber is higher than a predefined first service brake threshold pressure; at least one first flow control device connected to the air reservoir arrangement via a first fluid conduit and connected to the first air brake chamber via a second fluid conduit; at least one second air brake chamber configured to engage a service brake of a second wheel of the vehicle when an air pressure inside the second air brake chamber is higher than a predefined second service brake threshold pressure; at least one second flow control device connected to the air reservoir arrangement via a third fluid conduit and connected to the second air brake chamber via a fourth fluid conduit; at least one third flow control device connected to the first flow control device via the second fluid conduit, and to the first air brake chamber via a fifth fluid conduit; a parking brake sub-system connected to the air reservoir arrangement and configured to be controlled by an electronic parking brake system, and to automatically apply at least one parking brake to at least one wheel of the vehicle when an air pressure provided by the air reservoir arrangement falls below a predefined parking brake threshold pressure; and a braking system control unit coupled to first flow control device, the second flow control device, and the third flow control device, the method comprising: controlling, by the braking system control unit, in response to a set of indications including an indication of malfunction of the electronic parking brake system, an indication of a parking brake demand, and an indication that the vehicle is stationary, the first flow control device to alternate between its first state and its second state, in such a way that the second flow control device is in its second state only when the first flow control device is in its first state; and the second flow control device to alternate between its first state and its second state, in such a way that the second flow control device is in its second state only when the first flow control device is in its first state, until the pressure provided by the air reservoir arrangement has fallen below the predefined parking brake threshold pressure. The fourth aspect of the invention may seek to achieve safe application of the parking brake in the event of malfunction of the electronic parking brake system. A technical benefit may include to provide a method of operating a braking system that does not require other driver intervention than an indication that application of the parking brake is requested. The method according to the invention may not require interaction with a human driver, but may be at least partly carried out by an autonomous driving system, for example. Additionally, the method according to the invention may substantially prevent the truck from moving during the application of the parking brake.

In the present aspect, there is no need for the third flow control device of the braking system according to the first aspect, because the at least one first flow control device and the at least one second flow control device are controlled to alternate between their respective first and second states with such a timing that there is always at least one wheel that is braked by its service brake, in accordance with the state of the first or second flow control device configured to control flow of pressurized air to the air brake chamber of the service brake. Hereby, the pressure provided by the air reservoir arrangement can be brought down to below the predefined parking brake threshold pressure, while maintaining the service brake of at least one wheel (first wheel and second wheel alternatingly) engaged.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary braking system according to an example.
**FIG. 3** is an exemplary method according to an example.
**FIG. 4** is an exemplary braking system according to an example.
**FIGS. 5A-E** are exemplary diagrams illustrating example operation of a braking system.
**FIG. 6** is an exemplary braking system according to an example.
**FIG. 7** is an exemplary method according to an example.
**FIG. 8** is an exemplary braking system according to an example.
**FIGS. 9A-B** are exemplary diagrams illustrating example operation of a braking system.
**FIG. 10** is an exemplary diagrams illustrating example operation of a braking system.
**FIG. 11** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the invention.

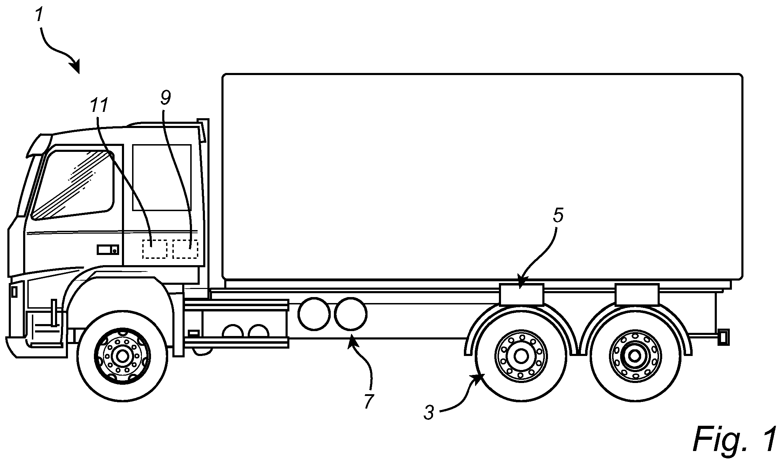

Fig. 1 is an exemplary vehicle 1 according to an example. Referring to Fig. 1, the exemplary vehicle 1 comprises vehicle wheels 3, a braking system 5, and an air reservoir arrangement 7 for storing pressurized air for operation of the braking system 5. Operation of the braking system 5 is controlled by a braking system control unit 9, and the vehicle 1 additionally comprises an electronic parking brake system 11, for electronic operation of the parking brake(s) of the vehicle 1. It should be noted that the braking system control unit 9 is functionally included in the braking system 5. Depending on the particular configuration of the vehicle 1, the braking system control unit 9 may be a stand-alone unit, or it may be implemented as a functional part of a higher level control unit.

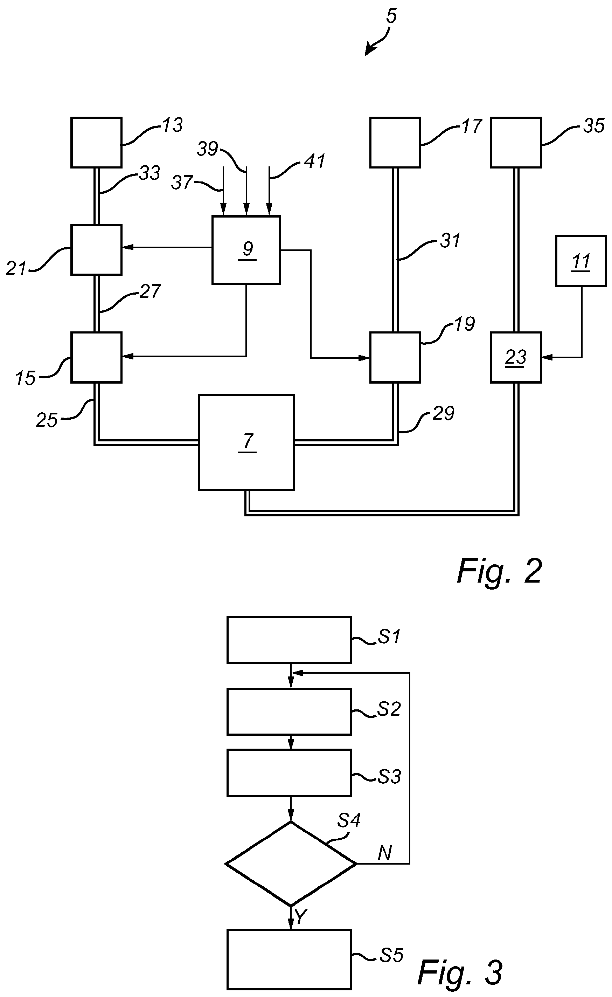

Fig. 2 is an exemplary braking system 5 according to an example. Referring to Fig. 2, the exemplary braking system 5 comprises an air reservoir arrangement 7, at least one first air brake chamber 13, at least one first flow control device 15, at least one second air brake chamber 17, at least one second flow control device 19, at least one third flow control device 21, a parking brake sub-system 23, and a braking system control unit 9. The first air brake chamber 13 is configured to engage a service brake of a first wheel of the vehicle when an air pressure inside the first air brake chamber 13 is higher than a predefined first service brake threshold pressure. Similarly, the second air brake chamber 17 is configured to engage a service brake of a second wheel of the vehicle when an air pressure inside the second air brake chamber 17 is higher than a predefined second service brake threshold pressure. As is schematically indicated in Fig. 2, the first flow control device 15 is fluid flow connected to the air reservoir arrangement 7 via a first fluid conduit 25 and connected to the first air brake chamber 13 via a second fluid conduit 27. The second flow control device 19 is connected to the air reservoir arrangement 7 via a third fluid conduit 29 and connected to the second air brake chamber via a fourth fluid conduit 31. The third flow control device 21 is connected to the first flow control device 15 via the second fluid conduit 27, and to the first air brake chamber 13 via a fifth fluid conduit 33. In the schematic illustration in Fig. 2, the braking system 5 is indicated as having one first air brake chamber 13 and one second air brake chamber 17. It should be noted that the braking system may comprise at least one additional first air brake chamber arranged and configured to brake an additional wheel different from the first wheel, and at least one additional second air brake chamber arranged and configured to brake an additional wheel different from the second wheel. With continued reference to Fig. 2, parking brake sub-system 23 is connected to the air reservoir arrangement 7 and is configured to be controlled by an electronic parking brake system. The parking brake sub-system is configured to automatically apply at least one parking brake 35 to at least one wheel 3 of the vehicle 1 when an air pressure provided by the air reservoir arrangement 7 falls below a predefined parking brake threshold pressure. The braking system control unit 9, as is schematically indicated by the single line arrows in Fig. 2, coupled to the first flow control device 15, the second flow control device 19, and the third flow control device 21. Further, the braking system control unit 9 is configured to control, in response to a set of indications including an indication 37 of malfunction of the electronic parking brake system 11, an indication 39 of a parking brake demand, and an indication 41 that the vehicle 1 is stationary, the third flow control device 21 to prevent the pressure inside the first air brake chamber 13 to go below the first service brake threshold pressure, and each of the first flow control device 15 and the second flow control device 19 to allow air from the air reservoir arrangement 7 to be discharged from the braking system 5, until the pressure provided by the air reservoir arrangement 7 has fallen below the predefined parking brake threshold pressure. Due to the provision and control of the third flow control device 21, the vehicle 1 can be substantially prevented from moving while the first flow control device 15 and the second flow control device 19 are controlled to allow air to escape from the air reservoir arrangement 7 at a sufficient rate for the pressure provided by the air reservoir arrangement 7 to fall below the parking brake threshold pressure, to thereby cause the parking brake sub-system to automatically apply the at least one parking brake, thereby securing the vehicle 1.

Fig. 3 is an exemplary method of operating a braking system for a heavy duty vehicle 1. The method comprises receiving S1 a set of indications including an indication 37 of malfunction of the electronic parking brake system 11, an indication 39 of a parking brake demand, and an indication 41 that the vehicle 1 is stationary. In response to the indications, the method proceeds to controlling S2 the third flow control device 21 to prevent the pressure inside the first air brake chamber 13 to go below the first service brake threshold pressure, and controlling S3 each of the first flow control device 15 and the second flow control device 19 to allow air from the air reservoir arrangement 7 to be discharged from the braking system 5. If the pressure provided by the air reservoir arrangement 7 has not yet fallen below the predefined parking brake threshold pressure (S4, "N"), the braking system control unit 9 continues to control the first flow control device 15, the second flow control device 19, and the third control device 21 as described above. When the pressure has fallen below the predefined parking brake threshold pressure (S4, "Y"), the parking brake sub-system 23 automatically applies S5 the parking brake 35.

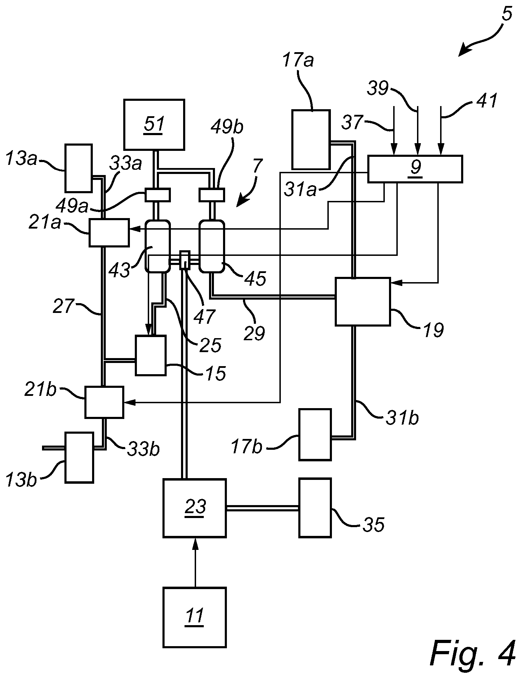

Fig.4 is an exemplary braking system 5 according to an example. In this exemplary braking system 5, various parts are included which are not absolutely necessary for operating the braking system 5 for safe application of the parking brake of a vehicle 1 in the event of malfunction of the electronic parking brake system 11, but which may provide various advantages. It should be noted that it is also not necessary to implement all of these various parts together, but that selected ones of the parts may be chosen to be implemented depending on the requirements of a particular application.

Referring to Fig. 4, the exemplary braking system 5 comprises a pair of first air brake chambers 13a-b controllable to engage the service brakes of a pair of front wheels, and a pair of second air brake chambers 17a-b controllable to engage the service brakes of a first pair of rear wheels. During normal operation of the service brakes, the air pressures in the first air brake chambers 13a-b may be controlled by the first flow control device 15, which may, for example be an electronically controllable pressure relay, which can be controlled, by the braking system control unit 9 to deliver desired air pressures to the respective first air brake chambers 13a-b. The air pressures may be selected to achieve a desired braking torque for retarding the vehicle and/or for stabilizing the vehicle 1. Similarly, the air pressures in the second air brake chambers 17a-b may be controlled by the second flow control device 19 Between the first flow control device 15 and each of the first air brake chambers 13a-b is provided a corresponding third flow control device 21a-b. The third flow control devices 21a-b may advantageously be arranged relatively close to their respective air brake chambers 13a-b, such as substantially closer to their respective air brake chambers 13a-b than to the first flow control device 15. During normal operation of the service brakes, the third flow control device 21a-b may be controlled to provide fast variations of the air pressures in the respective air braking chambers 13a-b, for instance for preventing, or at least reducing the tendency of, the service brakes locking up. Exemplary third flow control devices 21a-b may be referred to as "pressure control valves" or PCVs. As is shown in Fig. 4, the second flow control device 19 is connected to the second air brake chambers 17a-b by respective fourth fluid conduits 31a-b, and the third flow control devices 21a-b are connected to the first air brake chambers 13a-b by respective fifth fluid conduits 33a-b.

As is schematically indicated in Fig. 4, the air reservoir arrangement 7 may comprise at least one first air tank 43 and at least one second air tank 45. The first air tank 43 may be connected to the first flow control device 15 via the first fluid conduit 25 described above with reference to Fig. 2. The second air tank 45 may be connected to the second flow control device 19 via the third fluid conduit 29 described above with reference to Fig. 2. The braking system 5 may further comprise at least one fourth flow control device 47 connected to the first air tank 43, to the second air tank 45, and to the parking brake sub-system 23. The fourth flow control device 47 may be configured to provide to the parking brake sub-system 23 a highest air pressure of a first air pressure provided by the first air tank 43 and a second air pressure provided by the second air tank 45.

With continued reference to Fig. 4, the braking system 5 may comprise at least one fifth flow control device. The fifth flow control device (each of the fifth flow control devices 49a-b) may be configured to prevent flow of air between the first air tank 43 and the second air tank 45 in response to at least one of a first air pressure provided by the first air tank 43 and a second air pressure provided by the second air tank 45 becoming lower than a predefined air tank pressure. The fifth flow control devices 49a-b may thus be configured to isolate an air production arrangement 51 from a potentially leaking tank, and such flow control devices may, for example, be referred to as overflow valves.

In a braking system 5 with the configuration in Fig. 4 (first air tank 43, second air tank 45, fourth flow control device 47, and fifth flow control device(s) 49a-b), the pressure provided by the air reservoir arrangement 7 typically cannot be brought down to the parking brake threshold pressure only by (sufficiently) emptying one of the air tanks, but both air tanks may need to be (sufficiently) emptied.

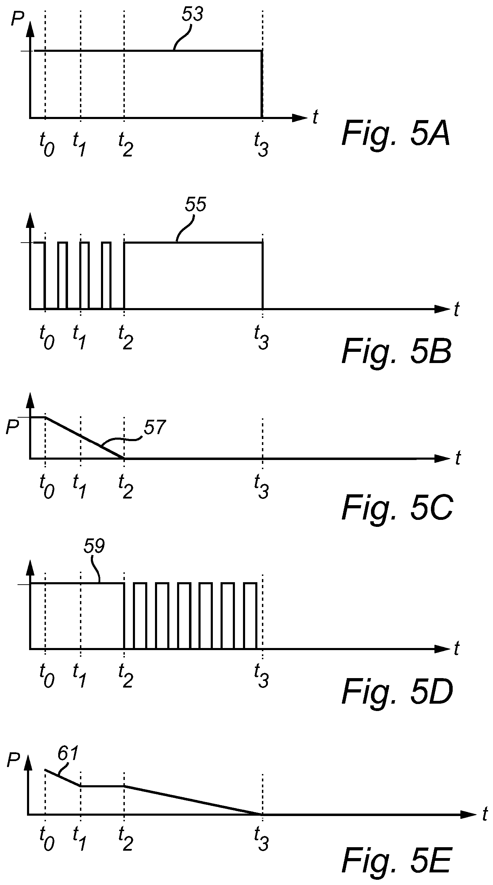

An exemplary scheme for emptying the first air tank 43 and the second air tank 45 in Fig. 4 is illustrated in Figs. 5A-E, which are exemplary diagrams illustrating example operation of a braking system. Fig. 5A schematically illustrates an exemplary air pressure 53 in the fifth fluid conduits 33a-b as a function of time, Fig. 5B is a graph 55 schematically illustrating an exemplary scheme for alternating between states of the first flow control device 15 as a function of time, Fig. 5C schematically illustrates an exemplary air pressure 57 in the first air tank 43 as a function of time, Fig. 5D is a graph 59 schematically illustrating an exemplary scheme for alternating between states of the second flow control device 19 as a function of time, and Fig. 5E schematically illustrates an exemplary air pressure 61 in the second air tank 45 as a function of time.

At the time t0 in Figs. 5A-E, the braking system control unit 9 receives the above-described set of indications including an indication 37 of malfunction of the electronic parking brake system, an indication 39 of a parking brake demand, and an indication 41 that the vehicle 1 is stationary. In response to these indications, the braking system control unit 9 controls, in this particular example, the third flow control devices 21a-b to maintain the pressure in the first air brake chambers 13a-b, thereby ensuring that the service brakes of the front wheels remain engaged. The third flow control devices 21a-b thus isolate the fifth fluid conduits 33a-b from the second fluid conduit 27, making the air pressures in the fifth fluid conduits 33a-b, and thus the air pressures in the first air brake chambers 13a-b, independent of the air pressure in the second fluid conduit 27.

The braking system control unit 9 then, in this particular example, controls the first flow control device 15 to alternate between a first state ("high" in fig 5B) in which it allows flow of air from the first air tank 43 into the second fluid conduit 27, and a second state ("low" in fig 5B) in which it allows air from the second fluid conduit 27 to be discharged from the braking system 5. As is schematically illustrated in fig 5C, this alternation of the first flow control device 15 between its first and second states results in a reduced air pressure in the first air tank 43, to a pressure that is lower than the parking brake threshold pressure. However, the reduction of the air pressure in the first air tank 43 will lead to the first overflow valve 49a closing at time t1, whereby the first air tank 43 and the second air tank 45 become isolated from each other, so that the second air tank 45 can no longer be emptied through the first flow control device 15. This is schematically illustrated in Fig. 5E, by a plateau in the pressure. Operation of the first overflow valve 49a will prevent the pressure provided by the air reservoir arrangement 7 to the parking brake sub-system from reaching the parking brake threshold pressure, because of the fourth flow control device 47 being configured to provide to the parking brake sub-system 23 a highest air pressure of a first air pressure provided by the first air tank 43 and a second air pressure provided by the second air tank 45.

To further reduce the air pressure 61 in the second air tank 45, the braking system control unit 9 controls the second flow control device 19 to alternate between a first state ("high" in fig 5D) in which it allows flow of air from the second air tank 43 into the fourth fluid conduits 31a-b, and a second state ("low" in fig 5D) in which it allows air from the third fluid conduits 31a-b to be discharged from the braking system 5. As is schematically illustrated in fig 5E, this alternation of the second flow control device 19 between its first and second states results in a reduced air pressure in the second air tank 45, until the time t3 when both the first air pressure 57 the first air tank 43 and the second air pressure 61 in the second air tank 45 have fallen below the parking brake threshold pressure, and the parking brake 35 is automatically applied. As will be apparent to one of ordinary skill in the relevant art, the order of control of the first flow control device 15 and the second flow control device 19 is not important, but the first 15 and second 19 flow control devices may be controlled to alternate between their respective first and second states at the same time or in a different order.

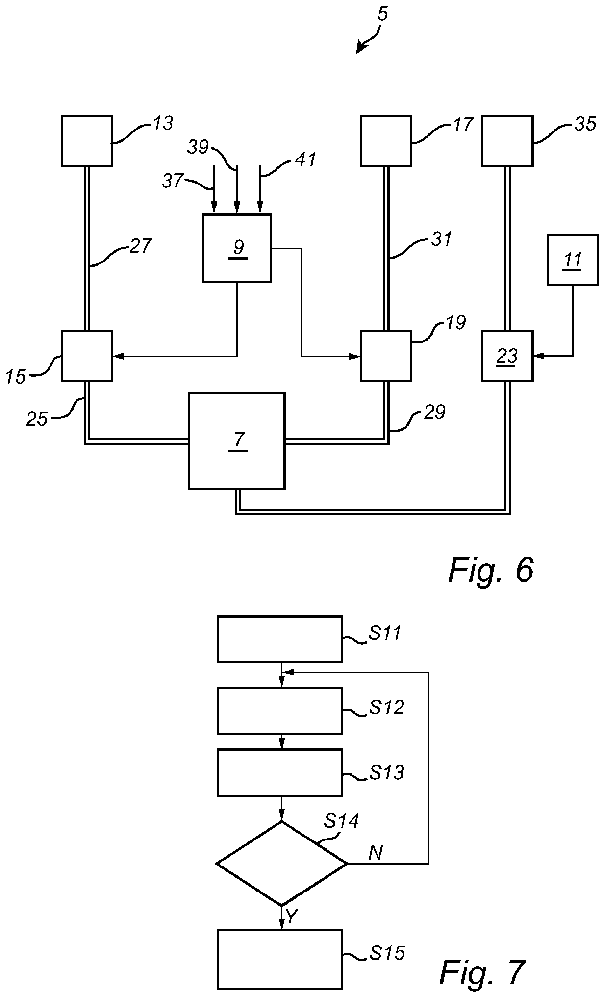

Fig. 6 is an exemplary braking system 5 according to an example. Referring to Fig. 6, the exemplary braking system 5 comprises an air reservoir arrangement 7, at least one first air brake chamber 13, at least one first flow control device 15, at least one second air brake chamber 17, at least one second flow control device 19, a parking brake sub-system 23, and a braking system control unit 9. The first air brake chamber 13 is configured to engage a service brake of a first wheel of the vehicle when an air pressure inside the first air brake chamber 13 is higher than a predefined first service brake threshold pressure. Similarly, the second air brake chamber 17 is configured to engage a service brake of a second wheel of the vehicle when an air pressure inside the second air brake chamber 17 is higher than a predefined second service brake threshold pressure. As is schematically indicated in Fig. 6, the first flow control device 15 is fluid flow connected to the air reservoir arrangement 7 via a first fluid conduit 25 and connected to the first air brake chamber 13 via a second fluid conduit 27. The second flow control device 19 is connected to the air reservoir arrangement 7 via a third fluid conduit 29 and connected to the second air brake chamber via a fourth fluid conduit 31. The first flow control device 15 is controllable between a first state in which it allows flow of air from the air reservoir arrangement 7 into the second fluid conduit 27, and a second state in which it allows air from the second fluid conduit 27 to be discharged from the braking system 5. The second flow control device 19 is controllable between a first state in which it allows flow of air from the air reservoir arrangement 7 into the fourth fluid conduit 31, and a second state in which it allows air from the fourth fluid conduit 31 to be discharged from the braking system. In the schematic illustration in Fig. 6, the braking system 5 is indicated as having one first air brake chamber 13 and one second air brake chamber 17. It should be noted that the braking system may comprise at least one additional first air brake chamber arranged and configured to brake an additional wheel different from the first wheel, and at least one additional second air brake chamber arranged and configured to brake an additional wheel different from the second wheel. With continued reference to Fig. 6, parking brake sub-system 23 is connected to the air reservoir arrangement 7 and is configured to be controlled by an electronic parking brake system. The parking brake sub-system is configured to automatically apply at least one parking brake 35 to at least one wheel 3 of the vehicle 1 when an air pressure provided by the air reservoir arrangement 7 falls below a predefined parking brake threshold pressure. The braking system control unit 9, as is schematically indicated by the single line arrows in Fig. 6, coupled to the first flow control device 15 and the second flow control device 19. Further, the braking system control unit 9 is configured to control, in response to a set of indications including an indication 37 of malfunction of the electronic parking brake system 11, an indication 39 of a parking brake demand, and an indication 41 that the vehicle 1 is stationary, control the first flow control device 15 to alternate between its first state and its second state, in such a way that the first flow control device 15 is in its second state only when the second flow control device 19 is in its first state; and control the second flow control device 19 to alternate between its first state and its second state, in such a way that the second flow control device 19 is in its second state only when the first flow control device 15 is in its first state, until the pressure provided by the air reservoir arrangement 7 has fallen below the predefined parking brake threshold pressure, to thereby cause the parking brake sub-system to automatically apply the at least one parking brake, thereby securing the vehicle 1.

Fig. 7 is an exemplary method of operating a braking system for a heavy duty vehicle 1. The method comprises receiving S11 a set of indications including an indication 37 of malfunction of the electronic parking brake system 11, an indication 39 of a parking brake demand, and an indication 41 that the vehicle 1 is stationary. In response to the indications, the method proceeds to controlling S12 the first flow control device 15 to alternate between its first state and its second state, and controlling S13 the second flow control device 19 to alternate between its first state and its second state, in such a way that the second flow control device 19 is in its second state only when the first flow control device 15 is in its first state to allow air from the air reservoir arrangement 7 to be discharged from the braking system 5. If the pressure provided by the air reservoir arrangement 7 has not yet fallen below the predefined parking brake threshold pressure (S14, "N"), the braking system control unit 9 continues to control the first flow control device 15 and the second flow control device 19 as described above. When the pressure has fallen below the predefined parking brake threshold pressure (S14, "Y"), the parking brake sub-system 23 automatically applies S15 the parking brake 35.

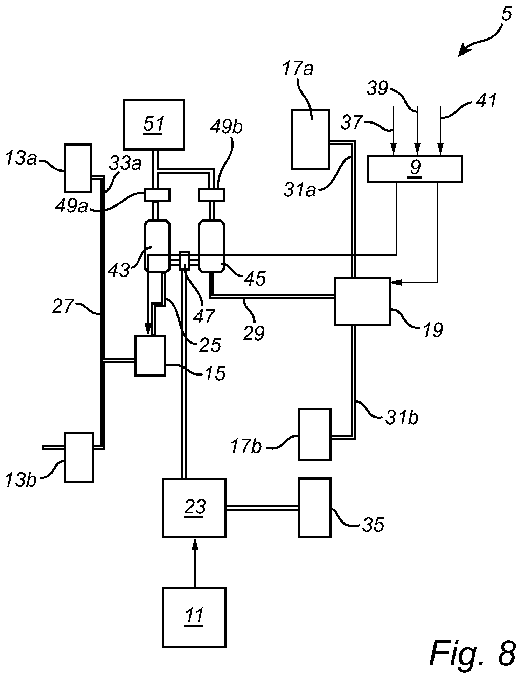

Fig. 8 is an exemplary braking system 5 according to an example. In this exemplary braking system 5, various parts are included which are not absolutely necessary for operating the braking system 5 for safe application of the parking brake of a vehicle 1 in the event of malfunction of the electronic parking brake system 11, but which may provide various advantages. It should be noted that it is also not necessary to implement all of these various parts together, but that selected ones of the parts may be chosen to be implemented depending on the requirements of a particular application.

Referring to Fig. 8, the exemplary braking system 5 comprises a pair of first air brake chambers 13a-b controllable to engage the service brakes of a pair of front wheels, and a pair of second air brake chambers 17a-b controllable to engage the service brakes of a first pair of rear wheels. During normal operation of the service brakes, the air pressures in the first air brake chambers 13a-b may be controlled by the first flow control device 15, which may, for example be an electronically controllable pressure relay, which can be controlled, by the braking system control unit 9 to deliver desired air pressures to the respective first air brake chambers 13a-b. The air pressures may be selected to achieve a desired braking torque for retarding the vehicle and/or for stabilizing the vehicle 1. Similarly, the air pressures in the second air brake chambers 17a-b may be controlled by the second flow control device 19. As is shown in Fig. 8, the second flow control device 19 is connected to the second air brake chambers 17a-b by respective fourth fluid conduits 31a-b.

As is schematically indicated in Fig. 8, the air reservoir arrangement 7 may comprise at least one first air tank 43 and at least one second air tank 45. The first air tank 43 may be connected to the first flow control device 15 via the first fluid conduit 25 described above with reference to Fig. 2. The second air tank 45 may be connected to the second flow control device 19 via the third fluid conduit 29 described above with reference to Fig. 2. The braking system 5 may further comprise at least one fourth flow control device 47 connected to the first air tank 43, to the second air tank 45, and to the parking brake sub-system 23. The fourth flow control device 47 may be configured to provide to the parking brake sub-system 23 a highest air pressure of a first air pressure provided by the first air tank 43 and a second air pressure provided by the second air tank 45.

With continued reference to Fig. 8, the braking system 5 may comprise at least one fifth flow control device. The fifth flow control device (each of the fifth flow control devices 49a-b) may be configured to prevent flow of air between the first air tank 43 and the second air tank 45 in response to at least one of a first air pressure provided by the first air tank 43 and a second air pressure provided by the second air tank 45 becoming lower than a predefined air tank pressure. The fifth flow control devices 49a-b may thus be configured to isolate an air production arrangement 51 from a potentially leaking tank, and such flow control devices may, for example, be referred to as overflow valves.

In a braking system 5 with the configuration in Fig. 8 (first air tank 43, second air tank 45, fourth flow control device 47, and fifth flow control device(s) 49a-b), the pressure provided by the air reservoir arrangement 7 typically cannot be brought down to the parking brake threshold pressure only by (sufficiently) emptying one of the air tanks, but both air tanks may need to be (sufficiently) emptied.

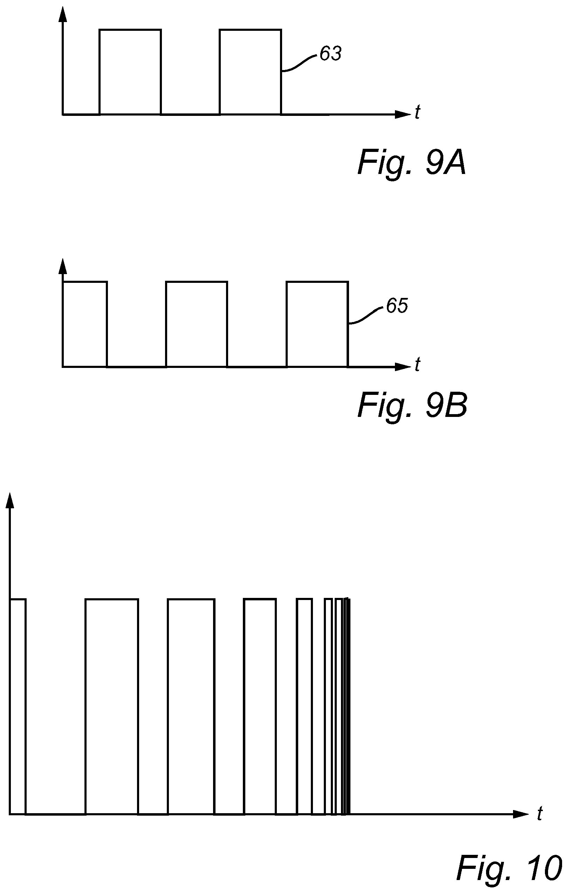

An exemplary scheme for emptying the first air tank 43 and the second air tank 45 in Fig. 8 is illustrated in Figs. 9A-B, which are exemplary diagrams illustrating example operation of a braking system. Fig. 9A is a graph 63 schematically illustrating an exemplary scheme for alternating between states of the first flow control device 15 as a function of time, and Fig. 9B is a graph 65 schematically illustrating an exemplary scheme for alternating between states of the second flow control device 19 as a function of time.

The braking system control unit 9 controls the first flow control device 15 to alternate between a first state ("high" in fig 9A) in which it allows flow of air from the first air tank 43 into the second fluid conduit 27, and a second state ("low" in fig 9A) in which it allows air from the second fluid conduit 27 to be discharged from the braking system 5. This alternation of the first flow control device 15 between its first and second states results in a reduced air pressure in the first air tank 43. The braking system control unit 9 also controls the second flow control device 19 to alternate between a first state ("high" in fig 9B) in which it allows flow of air from the second air tank 43 into the fourth fluid conduits 31a-b, and a second state ("low" in fig 9B) in which it allows air from the third fluid conduits 31a-b to be discharged from the braking system 5. This alternation of the second flow control device 19 between its first and second states results in a reduced air pressure in the second air tank 45. Due to the alternations substantially in anti-phase, both the first air pressure in the first air tank 43 and the second air pressure in the second air tank 45 can be reduced below the parking brake threshold pressure, and the parking brake 35 is automatically applied.

Fig. 10 is an exemplary diagram illustrating example operation of a braking system, schematically showing control of the first flow control device 15 and/or the second flow control device 19 to alternate between its first and second states with an alternation frequency that increases over time, in order to reduce the time needed to reduce the pressures in the air tanks to the desired level.

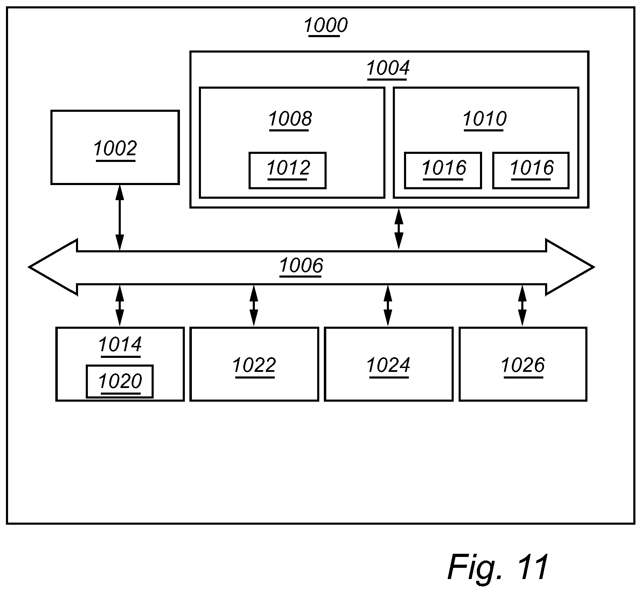

Fig. 11 is a schematic diagram of a computer system **1000** for implementing examples disclosed herein, such as for implementing examples of the braking system control unit 9 of the braking system 5 according to examples. The computer system **1000** is adapted to execute instructions from a computer-readable medium to perform these and/or any of the functions or processing described herein. The computer system **1000** may be connected (e.g., networked) to other machines in a LAN, an intranet, an extranet, or the Internet. While only a single device is illustrated, the computer system **1000** may include any collection of devices that individually or jointly execute a set (or multiple sets) of instructions to perform any one or more of the methodologies discussed herein. Accordingly, any reference in the invention and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1000** may comprise at least one computing device or electronic device capable of including firmware, hardware, and/or executing software instructions to implement the functionality described herein. The computer system **1000** may include processing circuitry **1002** (e.g., processing circuitry including one or more processor devices or control units), a memory **1004,** and a system bus **1006.** The computer system **1000** may include at least one computing device having the processing circuitry **1002.** The system bus **1006** provides an interface for system components including, but not limited to, the memory **1004** and the processing circuitry **1002.** The processing circuitry **1002** may include any number of hardware components for conducting data or indication processing or for executing computer code stored in memory **1004.** The processing circuitry **1002** may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1002** may further include computer executable code that controls operation of the programmable device.

The system bus **1006** may be any of several types of bus structures that may further interconnect to a memory bus (with or without a memory controller), a peripheral bus, and/or a local bus using any of a variety of bus architectures. The memory **1004** may be one or more devices for storing data and/or computer code for completing or facilitating methods described herein. The memory **1004** may include database components, object code components, script components, or other types of information structure for supporting the various activities herein. Any distributed or local memory device may be utilized with the systems and methods of this description. The memory **1004** may be communicably connected to the processing circuitry **1002** (e.g., via a circuit or any other wired, wireless, or network connection) and may include computer code for executing one or more processes described herein. The memory **1004** may include non-volatile memory **1008** (e.g., read-only memory (ROM), erasable programmable read-only memory (EPROM), electrically erasable programmable read-only memory (EEPROM), etc.), and volatile memory **1010** (e.g., random-access memory (RAM)), or any other medium which can be used to carry or store desired program code in the form of machine-executable instructions or data structures and which can be accessed by a computer or other machine with processing circuitry **1002.** A basic input/output system (BIOS) **1012** may be stored in the non-volatile memory **1008** and can include the basic routines that help to transfer information between elements within the computer system **1000.**

The computer system **1000** may further include or be coupled to a non-transitory computer-readable storage medium such as the storage device **1014,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1014** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1014** and/or in the volatile memory **1010,** which may include an operating system **1016** and/or one or more program modules **1018.** All or a portion of the examples disclosed herein may be implemented as a computer program **1020** stored on a transitory or non-transitory computer-usable or computer-readable storage medium (e.g., single medium or multiple media), such as the storage device **1014,** which includes complex programming instructions (e.g., complex computer-readable program code) to cause the processing circuitry **1002** to carry out actions described herein. Thus, the computer-readable program code of the computer program **1020** can comprise software instructions for implementing the functionality of the examples described herein when executed by the processing circuitry **1002.** In some examples, the storage device **1014** may be a computer program product (e.g., readable storage medium) storing the computer program **1020** thereon, where at least a portion of a computer program **1020** may be loadable (e.g., into a processor) for implementing the functionality of the examples described herein when executed by the processing circuitry **1002.** The processing circuitry **1002** may serve as a controller or control system for the computer system **1000** that is to implement the functionality described herein.

The computer system **1000** may include an input device interface **1022** configured to receive input and selections to be communicated to the computer system **1000** when executing instructions, such as from a keyboard, mouse, touch-sensitive surface, etc. Such input devices may be connected to the processing circuitry **1002** through the input device interface **1022** coupled to the system bus **1006** but can be connected through other interfaces, such as a parallel port, an Institute of Electrical and Electronic Engineers (IEEE) 1394 serial port, a Universal Serial Bus (USB) port, an IR interface, and the like. The computer system **1000** may include an output device interface **1024** configured to forward output, such as to a display, a video display unit (e.g., a liquid crystal display (LCD) or a cathode ray tube (CRT)). The computer system **1000** may include a communications interface **1026** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention and appended claims. In the drawings and specification, there have been disclosed aspects for purposes of illustration only and not for purposes of limitation, the scope of the invention being set forth in the following claims.

## Claims

1. A braking system (5) for a heavy duty vehicle (1), comprising:
an air reservoir arrangement (7) for storing pressurized air for operation of the braking system (5);
at least one first air brake chamber (13) configured to engage a service brake of a first wheel of the vehicle (1) when an air pressure inside the first air brake chamber (13) is higher than a predefined first service brake threshold pressure;
at least one first flow control device (15) connected to the air reservoir arrangement (7) via a first fluid conduit (25) and connected to the first air brake chamber (13) via a second fluid conduit (27);
at least one second air brake chamber (17) configured to engage a service brake of a second wheel of the vehicle (1) when an air pressure inside the second air brake chamber (17) is higher than a predefined second service brake threshold pressure;
at least one second flow control device (19) connected to the air reservoir arrangement (7) via a third fluid conduit (29) and connected to the second air brake chamber (17) via a fourth fluid conduit (31);
at least one third flow control device (21) connected to the first flow control device (15) via the second fluid conduit (27), and to the first air brake chamber (13) via a fifth fluid conduit (33);
a parking brake sub-system (23) connected to the air reservoir arrangement (7) and configured to be controlled by an electronic parking brake system (11), and to automatically apply at least one parking brake to at least one wheel of the vehicle (1) when an air pressure provided by the air reservoir arrangement (7) falls below a predefined parking brake threshold pressure; and
a braking system control unit (9) coupled to first flow control device (15), the second flow control device (19), and the third flow control device (21), the braking system control unit (9) being configured to control, in response to a set of indications including an indication of malfunction of the electronic parking brake system (23), an indication of a parking brake demand, and an indication that the vehicle is stationary, the third flow control device (21) to prevent the pressure inside the first air brake chamber (13) to go below the first service brake threshold pressure, and each of the first flow control device (15) and the second flow control device (19) to allow air from the air reservoir arrangement (7) to be discharged from the braking system (5), until the pressure provided by the air reservoir arrangement (7) has fallen below the predefined parking brake threshold pressure.

2. The braking system (5) of claim 1, wherein:
the first flow control device (15) is controllable between a first state in which it allows flow of air from the air reservoir arrangement (7) into the second fluid conduit (27), and a second state in which it allows air from the second fluid conduit (27) to be discharged from the braking system (5);
the second flow control device (19) is controllable between a first state in which it allows flow of air from the air reservoir arrangement (7) into the fourth fluid conduit (31), and a second state in which it allows air from the fourth fluid conduit (31) to be discharged from the braking system (5); and
the braking system control unit (9) is configured to control:
the first flow control device (15) to alternate between its first state and its second state; and
the second flow control device (19) to alternate between its first state and its second state,
thereby allowing air from the air reservoir arrangement (7) to be discharged from the braking system (5).

3. The braking system (5) of claim 2, wherein the braking system control unit (9) is configured to control the second flow control device (19) to alternate between its first state and its second state with an increasing alternation frequency.

4. The braking system (5) of any of claims 1 to 3, wherein the air reservoir arrangement (7) comprises:
at least one first air tank (43) connected to the first flow control device (15) via the first fluid conduit (25); and
at least one second air tank (45) connected to the second flow control device (19) via the third fluid conduit (29).

5. The braking system (5) of claim 4, comprising at least one fourth flow control device (47) connected to the first air tank (43), to the second air tank (45), and to the parking brake sub-system (23), the fourth flow control device (47) being configured to provide to the parking brake sub-system (23) a highest air pressure of a first air pressure provided by the first air tank (43) and a second air pressure provided by the second air tank (45).

6. The braking system (5) of claim 4 or 5, comprising at least one fifth flow control device (49a-b) arranged to control a flow of air between the first air tank (43) and the second air tank (45), the fifth flow control device (49a-b) being configured to prevent flow of air between the first air tank (43) and the second air tank (45) in response to at least one of a first air pressure provided by the first air tank (43) and a second air pressure provided by the second air tank (45) becoming lower than a predefined air tank pressure.

7. A vehicle (1) comprising:
vehicle wheels (3); and
the braking system (5) of any of claims 1 to 6 arranged to brake at least one of the vehicle wheels (3).

8. A method of operating a braking system (5) for a heavy duty vehicle (1), the braking system (5) comprising an air reservoir arrangement (7) for storing pressurized air for operation of the braking system (5); at least one first air brake chamber (13) configured to engage a service brake of a first wheel of the vehicle (1) when an air pressure inside the first air brake chamber (13) is higher than a predefined first service brake threshold pressure; at least one first flow control device (15) connected to the air reservoir arrangement (7) via a first fluid conduit (25) and connected to the first air brake chamber (13) via a second fluid conduit (27); at least one second air brake chamber (17) configured to engage a service brake of a second wheel of the vehicle (1) when an air pressure inside the second air brake chamber (17) is higher than a predefined second service brake threshold pressure; at least one second flow control device (19) connected to the air reservoir arrangement (7) via a third fluid conduit (29) and connected to the second air brake chamber (17) via a fourth fluid conduit (31); at least one third flow control device (21) connected to the first flow control device (15) via the second fluid conduit (27), and to the first air brake chamber (13) via a fifth fluid conduit (33); a parking brake sub-system (23) connected to the air reservoir arrangement (7) and configured to be controlled by an electronic parking brake system (11), and to automatically apply at least one parking brake to at least one wheel of the vehicle (1) when an air pressure provided by the air reservoir arrangement (7) falls below a predefined parking brake threshold pressure; and a braking system control unit (9) coupled to first flow control device (15), the second flow control device (19), and the third flow control device (21), the method comprising:
controlling (S2), by the braking system control unit (9), in response to a set of indications including an indication of malfunction of the electronic parking brake system (11), an indication of a parking brake demand, and an indication that the vehicle (1) is stationary, the third flow control device (21) to prevent the pressure inside the first air brake chamber (13) to go below the first service brake threshold pressure, and each of the first flow control device (15) and the second flow control device (19) to allow air from the air reservoir arrangement (7) to be discharged from the braking system (5), until the pressure provided by the air reservoir arrangement (7) has fallen below the predefined parking brake threshold pressure.

9. A braking system (5) for a heavy duty vehicle, comprising:
an air reservoir arrangement (7) for storing pressurized air for operation of the braking system;
a first air brake chamber (13) configured to engage a service brake of a first wheel of the vehicle (1) when an air pressure inside the first air brake chamber (13) is higher than a predefined first service brake threshold pressure;
a first flow control device (15) connected to the air reservoir arrangement (7) via a first fluid conduit (25) and connected to the first air brake chamber (13) via a second fluid conduit (27), the first flow control device (15) being controllable between a first state in which it allows flow of air from the air reservoir arrangement (7) into the second fluid conduit (27), and a second state in which it allows air from the second fluid conduit (27) to be discharged from the braking system (5);
a second air brake chamber (17) configured to engage a service brake of a second wheel of the vehicle (1) when an air pressure inside the second air brake chamber (17) is higher than a predefined second service brake threshold pressure;
a second flow control device (19) connected to the air reservoir arrangement (7) via a third fluid conduit (29) and connected to the second air brake chamber (17) via a fourth fluid conduit (31), the second flow control device (19) being controllable between a first state in which it allows flow of air from the air reservoir arrangement (7) into the fourth fluid conduit (31), and a second state in which it allows air from the fourth fluid conduit (31) to be discharged from the braking system (5);
a parking brake sub-system (23) connected to the air reservoir arrangement (7) and configured to be controlled by an electronic parking brake system (11), and to automatically apply a parking brake to at least one wheel of the vehicle (1) when an air pressure provided by the air reservoir arrangement (7) falls below a predefined parking brake threshold pressure; and
a braking system control unit (9) coupled to the first flow control device (15), and the second flow control device (19),
the braking system control unit (9) being configured to control, in response to a set of indications including an indication of malfunction of the electronic parking brake system (11), an indication of a parking brake demand, and an indication that the vehicle (1) is stationary:
the first flow control device (15) to alternate between its first state and its second state, in such a way that the first flow control device (15) is in its second state only when the second flow control device (19) is in its first state; and
the second flow control device (19) to alternate between its first state and its second state, in such a way that the second flow control device (19) is in its second state only when the first flow control device (15) is in its first state,
until the pressure provided by the air reservoir arrangement (7) has fallen below the predefined parking brake threshold pressure.

10. The braking system (5) of claim 9, wherein the braking system control unit (9) is configured to control at least one of the first flow control device (15) and the second flow control device (19) to alternate between its first state and its second state with an increasing alternation frequency.

11. The braking system (5) of claim 9 or 10, wherein the air reservoir arrangement (7) comprises:
at least one first air tank (43) connected to the first flow control device (15) via the first fluid conduit (25); and
at least one second air tank (45) connected to the second flow control device (19) via the third fluid conduit (29).

12. The braking system (5) of claim 11, comprising at least one fourth flow control device (47) connected to the first air tank (43), to the second air tank (45), and to the parking brake sub-system (23), the fourth flow control device (47) being configured to provide to the parking brake sub-system (23) a highest air pressure of a first air pressure provided by the first air tank (43) and a second air pressure provided by the second air tank (45).

13. The braking system (5) of claim 11 or 12, comprising at least one fifth flow control device (49a-b) arranged to control a flow of air between the first air tank (43) and the second air tank (45), the fifth flow control device (49a-b) being configured to prevent flow of air between the first air tank (43) and the second air tank (45) in response to at least one of a first air pressure provided by the first air tank (43) and a second air pressure provided by the second air tank (45) becoming lower than a predefined air tank pressure.

14. A vehicle (1) comprising:
vehicle wheels (3); and
the braking system (5) of any of claims 9 to 13 arranged to brake at least one of the vehicle wheels (3).

15. A method of operating a braking system (5) for a heavy duty vehicle (1), the braking system (5) comprising an air reservoir arrangement (7) for storing pressurized air for operation of the braking system (5); at least one first air brake chamber (13) configured to engage a service brake of a first wheel of the vehicle (1) when an air pressure inside the first air brake chamber (13) is higher than a predefined first service brake threshold pressure; at least one first flow control device (15) connected to the air reservoir arrangement (7) via a first fluid conduit (25) and connected to the first air brake chamber (13) via a second fluid conduit (27); at least one second air brake chamber (17) configured to engage a service brake of a second wheel of the vehicle (1) when an air pressure inside the second air brake chamber (17) is higher than a predefined second service brake threshold pressure; at least one second flow control device (19) connected to the air reservoir arrangement (7) via a third fluid conduit (29) and connected to the second air brake chamber (17) via a fourth fluid conduit (31); a parking brake sub-system (23) connected to the air reservoir arrangement (7) and configured to be controlled by an electronic parking brake system (11), and to automatically apply at least one parking brake to at least one wheel of the vehicle (1) when an air pressure provided by the air reservoir arrangement (7) falls below a predefined parking brake threshold pressure; and a braking system control unit (9) coupled to first flow control device (15) and the second flow control device (19), the method comprising:
controlling, by the braking system control unit (9), in response to a set of indications including an indication of malfunction of the electronic parking brake system (11), an indication of a parking brake demand, and an indication that the vehicle (1) is stationary, the first flow control device (15) to alternate between its first state and its second state, in such a way that the second flow control device (19) is in its second state only when the first flow control device (15) is in its first state; and the second flow control device (19) to alternate between its first state and its second state, in such a way that the second flow control device (19) is in its second state only when the first flow control device (15) is in its first state, until the pressure provided by the air reservoir arrangement (7) has fallen below the predefined parking brake threshold pressure.

## Patentansprüche

1. Bremssystem (5) für ein Schwerlastfahrzeug (1), umfassend:
eine Luftspeicherbaugruppe (7) zum Speichern von Druckluft für den Betrieb des Bremssystems (5);
mindestens eine erste Luftbremskammer (13), die dazu konfiguriert ist, eine Betriebsbremse eines ersten Rads des Fahrzeugs (1) zu betätigen, wenn ein Luftdruck innerhalb der ersten Luftbremskammer (13) höher ist als ein vordefinierter Schwellenwert für den Druck der ersten Betriebsbremse;
mindestens eine erste Durchflussregelvorrichtung (15), die mit der Luftspeicherbaugruppe (7) über eine erste Fluidleitung (25) verbunden ist und mit der ersten Luftbremskammer (13) über eine zweite Fluidleitung (27) verbunden ist;
mindestens eine zweite Luftbremskammer (17), die dazu konfiguriert ist, eine Betriebsbremse eines zweiten Rads des Fahrzeugs (1) zu betätigen, wenn ein Luftdruck innerhalb der zweiten Luftbremskammer (17) höher ist als ein vordefinierter Schwellenwert für den Druck der zweiten Betriebsbremse;
mindestens eine zweite Durchflussregelvorrichtung (19), die mit der Luftspeicherbaugruppe (7) über eine dritte Fluidleitung (29) verbunden ist und mit der zweiten Luftbremskammer (17) über eine vierte Fluidleitung (31) verbunden ist;
mindestens eine dritte Durchflussregelvorrichtung (21), die mit der ersten Durchflussregelvorrichtung (15) über die zweite Fluidleitung (27) verbunden ist und mit der ersten Luftbremskammer (13) über eine fünfte Fluidleitung (33) verbunden ist;
ein Feststellbremsen-Untersystem (23), das mit der Luftspeicherbaugruppe (7) verbunden und dazu konfiguriert ist, von einem elektronischen Feststellbremssystem (11) gesteuert zu werden und mindestens ein Rad des Fahrzeugs (1) mit mindestens einer Feststellbremse automatisch zu bremsen, wenn ein von der Luftspeicherbaugruppe (7) bereitgestellter Luftdruck unterhalb eines vordefinierten Schwellenwerts für den Druck einer Feststellbremse fällt; und
eine Bremssystem-Steuereinheit (9), die mit der ersten Durchflussregelvorrichtung (15), der zweiten Durchflussregelvorrichtung (19) und der dritten Durchflussregelvorrichtung (21) gekoppelt ist, wobei die Bremssystem-Steuereinheit (9) dazu konfiguriert ist, als Reaktion auf einen Satz von Angaben, einschließlich einer Angabe über eine Störung des elektronischen Feststellbremssystems (23), einer Angabe über eine Feststellbremsanforderung und einer Angabe, dass das Fahrzeug still steht, die dritte Durchflussregelvorrichtung (21) zu steuern, um zu verhindern, dass der Druck innerhalb der ersten Luftbremskammer (13) den Schwellenwert für den Druck der ersten Betriebsbremse unterschreitet, und jeweils die erste Durchflussregelvorrichtung (15) und die zweite Durchflussregelvorrichtung (19) zu steuern, um zu ermöglichen, dass Luft aus der Luftspeicherbaugruppe (7) aus dem Bremssystem (5) abgelassen wird, bis der von der Luftspeicherbaugruppe (7) bereitgestellte Druck unterhalb des vordefinierten Schwellenwerts für den Druck der Feststellbremse gefallen ist.

2. Bremssystem (5) nach Anspruch 1, wobei:
die erste Durchflussregelvorrichtung (15) zwischen einem ersten Zustand, in dem sie eine Luftströmung von der Luftspeicherbaugruppe (7) in die zweite Fluidleitung (27) ermöglicht, und einem zweiten Zustand, in dem sie ermöglicht, dass Luft aus der zweiten Fluidleitung (27) aus dem Bremssystem (5) abgelassen wird, gesteuert werden kann;
die zweite Durchflussregelvorrichtung (19) zwischen einem ersten Zustand, in dem sie eine Luftströmung von der Luftspeicherbaugruppe (7) in die vierte Fluidleitung (31) ermöglicht, und einem zweiten Zustand, in dem sie ermöglicht, dass Luft aus der vierten Fluidleitung (31) aus dem Bremssystem (5) abgelassen wird, gesteuert werden kann; und
die Bremssystem-Steuereinheit (9) dazu konfiguriert ist, Folgendes zu steuern:
die erste Durchflussregelvorrichtung (15), um zwischen ihrem ersten Zustand und ihrem zweiten Zustand zu wechseln; und
die zweite Durchflussregelvorrichtung (19), um zwischen ihrem ersten Zustand und ihrem zweiten Zustand zu wechseln,
wodurch ermöglicht wird, dass Luft aus der Luftspeicherbaugruppe (7) aus dem Bremssystem (5) abgelassen wird.

3. Bremssystem (5) nach Anspruch 2, wobei die Bremssystem-Steuereinheit (9) dazu konfiguriert ist, die zweite Durchflussregelvorrichtung (19) zu steuern, um zwischen ihrem ersten Zustand und ihrem zweiten Zustand mit einer zunehmenden Wechselhäufigkeit zu wechseln.

4. Bremssystem (5) nach einem der Ansprüche 1 bis 3, wobei die Luftspeicherbaugruppe (7) umfasst:
mindestens einen ersten Luftbehälter (43), der mit der ersten Durchflussregelvorrichtung (15) über die erste Fluidleitung (25) verbunden ist; und
mindestens einen zweiten Luftbehälter (45), der mit der zweiten Durchflussregelvorrichtung (19) über die dritte Fluidleitung (29) verbunden ist.

5. Bremssystem (5) nach Anspruch 4, das mindestens eine vierte Durchflussregelvorrichtung (47) umfasst, die mit dem ersten Luftbehälter (43), mit dem zweiten Luftbehälter (45) und mit dem Feststellbremsen-Untersystem (23) verbunden ist, wobei die vierte Durchflussregelvorrichtung (47) dazu konfiguriert ist, dem Feststellbremsen-Untersystem (23) den höchsten Luftdruck eines durch den ersten Luftbehälter (43) bereitgestellten ersten Luftdrucks und eines durch den zweiten Luftbehälter (45) bereitgestellten zweiten Luftdrucks bereitzustellen.

6. Bremssystem (5) nach Anspruch 4 oder 5, das mindestens eine fünfte Durchflussregelvorrichtung (49a-b) umfasst, die dazu angeordnet ist, eine Luftströmung zwischen dem ersten Luftbehälter (43) und dem zweiten Luftbehälter (45) zu regeln, wobei die fünfte Durchflussregelvorrichtung (49a-b) dazu konfiguriert ist, eine Luftströmung zwischen dem ersten Luftbehälter (43) und dem zweiten Luftbehälter (45) als Reaktion darauf zu verhindern, dass mindestens einer eines durch den ersten Luftbehälter (43) bereitgestellten ersten Luftdrucks und eines durch den zweiten Luftbehälter (45) bereitgestellten zweiten Luftdrucks niedriger wird als ein vordefinierter Luftbehälterdruck.

7. Fahrzeug (1), umfassend:
Fahrzeugräder (3); und
das Bremssystem (5) nach einem der Ansprüche 1 bis 6, das dazu angeordnet ist, mindestens eines der Fahrzeugräder (3) zu bremsen.

8. Verfahren zum Betreiben eines Bremssystems (5) für ein Schwerlastfahrzeug (1), wobei das Bremssystem (5) eine Luftspeicherbaugruppe (7) zum Speichern von Druckluft für den Betrieb des Bremssystems (5); mindestens eine erste Luftbremskammer (13), die dazu konfiguriert ist, eine Betriebsbremse eines ersten Rads des Fahrzeugs (1) zu betätigen, wenn ein Luftdruck innerhalb der ersten Luftbremskammer (13) höher ist als ein vordefinierter Schwellenwert für den Druck der ersten Betriebsbremse; mindestens eine erste Durchflussregelvorrichtung (15), die mit der Luftspeicherbaugruppe (7) über eine erste Fluidleitung (25) verbunden ist und mit der ersten Luftbremskammer (13) über eine zweite Fluidleitung (27) verbunden ist; mindestens eine zweite Luftbremskammer (17), die dazu konfiguriert ist, eine Betriebsbremse eines zweiten Rads des Fahrzeugs (1) zu betätigen, wenn ein Luftdruck innerhalb der zweiten Luftbremskammer (17) höher ist als ein vordefinierter Schwellenwert für den Druck der zweiten Betriebsbremse; mindestens eine zweite Durchflussregelvorrichtung (19), die mit der Luftspeicherbaugruppe (7) über eine dritte Fluidleitung (29) verbunden ist und mit der zweiten Luftbremskammer (17) über eine vierte Fluidleitung (31) verbunden ist; mindestens eine dritte Durchflussregelvorrichtung (21), die mit der ersten Durchflussregelvorrichtung (15) über die zweite Fluidleitung (27) verbunden ist und mit der ersten Luftbremskammer (13) über eine fünfte Fluidleitung (33) verbunden ist; ein Feststellbremsen-Untersystem (23), das mit der Luftspeicherbaugruppe (7) verbunden und dazu konfiguriert ist, von einem elektronischen Feststellbremssystem (11) gesteuert zu werden und mindestens ein Rad des Fahrzeugs (1) mit mindestens einer Feststellbremse automatisch zu bremsen, wenn ein von der Luftspeicherbaugruppe (7) bereitgestellter Luftdruck unterhalb eines vordefinierten Schwellenwerts für den Druck einer Feststellbremse fällt; und eine Bremssystem-Steuereinheit (9) umfasst, die mit der ersten Durchflussregelvorrichtung (15), der zweiten Durchflussregelvorrichtung (19) und der dritten Durchflussregelvorrichtung (21) gekoppelt ist, wobei das Verfahren Folgendes umfasst:
Steuern (S2), durch die Bremssystem-Steuereinheit (9) als Reaktion auf einen Satz von Angaben, einschließlich einer Angabe über eine Störung des elektronischen Feststellbremssystems (11), einer Angabe über eine Feststellbremsanforderung und einer Angabe, dass das Fahrzeug (1) still steht, der dritten Durchflussregelvorrichtung (21), um zu verhindern, dass der Druck innerhalb der ersten Luftbremskammer (13) den Schwellenwert für den Druck der ersten Betriebsbremse unterschreitet, und jeweils der ersten Durchflussregelvorrichtung (15) und der zweiten Durchflussregelvorrichtung (19), um zu ermöglichen, dass Luft aus der Luftspeicherbaugruppe (7) aus dem Bremssystem (5) abgelassen wird, bis der von der Luftspeicherbaugruppe (7) bereitgestellte Druck unterhalb des vordefinierten Schwellenwerts für den Druck der Feststellbremse gefallen ist.

9. Bremssystem (5) für ein Schwerlastfahrzeug, umfassend:
eine Luftspeicherbaugruppe (7) zum Speichern von Druckluft für den Betrieb des Bremssystems;
eine erste Luftbremskammer (13), die dazu konfiguriert ist, eine Betriebsbremse eines ersten Rads des Fahrzeugs (1) zu betätigen, wenn ein Luftdruck innerhalb der ersten Luftbremskammer (13) höher ist als ein vordefinierter Schwellenwert für den Druck der ersten Betriebsbremse;
eine erste Durchflussregelvorrichtung (15), die mit der Luftspeicherbaugruppe (7) über eine erste Fluidleitung (25) verbunden ist und mit der ersten Luftbremskammer (13) über eine zweite Fluidleitung (27) verbunden ist, wobei die erste Durchflussregelvorrichtung (15) zwischen einem ersten Zustand, in dem sie eine Luftströmung von der Luftspeicherbaugruppe (7) in die zweite Fluidleitung (27) ermöglicht, und einem zweiten Zustand, in dem sie ermöglicht, dass Luft aus der zweiten Fluidleitung (27) aus dem Bremssystem (5) abgelassen wird, gesteuert werden kann;
eine zweite Luftbremskammer (17), die dazu konfiguriert ist, eine Betriebsbremse eines zweiten Rads des Fahrzeugs (1) zu betätigen, wenn ein Luftdruck innerhalb der zweiten Luftbremskammer (17) höher ist als ein vordefinierter Schwellenwert für den Druck der zweiten Betriebsbremse;
eine zweite Durchflussregelvorrichtung (19), die mit der Luftspeicherbaugruppe (7) über eine dritte Fluidleitung (29) verbunden ist und mit der zweiten Luftbremskammer (17) über eine vierte Fluidleitung (31) verbunden ist, wobei die zweite Durchflussregelvorrichtung (19) zwischen einem ersten Zustand, in dem sie eine Luftströmung von der Luftspeicherbaugruppe (7) in die vierte Fluidleitung (31) ermöglicht, und einem zweiten Zustand, in dem sie ermöglicht, dass Luft aus der vierten Fluidleitung (31) aus dem Bremssystem (5) abgelassen wird, gesteuert werden kann;
ein Feststellbremsen-Untersystem (23), das mit der Luftspeicherbaugruppe (7) verbunden und dazu konfiguriert ist, von einem elektronischen Feststellbremssystem (11) gesteuert zu werden und mindestens ein Rad des Fahrzeugs (1) mit mindestens einer Feststellbremse automatisch zu bremsen, wenn ein von der Luftspeicherbaugruppe (7) bereitgestellter Luftdruck unterhalb eines vordefinierten Schwellenwerts für den Druck einer Feststellbremse fällt; und
eine Bremssystem-Steuereinheit (9), die mit der ersten Durchflussregelvorrichtung (15) und der zweiten Durchflussregelvorrichtung (19) gekoppelt ist,
wobei die Bremssystem-Steuereinheit (9) dazu konfiguriert ist, als Reaktion auf einen Satz von Angaben, einschließlich einer Angabe über eine Störung des elektronischen Feststellbremssystems (11), einer Angabe über eine Feststellbremsanforderung und einer Angabe, dass das Fahrzeug (1) still steht, Folgendes zu steuern:
die erste Durchflussregelvorrichtung (15), um zwischen ihrem ersten Zustand und ihrem zweiten Zustand derart zu wechseln, dass sich die erste Durchflussregelvorrichtung (15) nur dann in ihrem zweiten Zustand befindet, wenn sich die zweite Durchflussregelvorrichtung (19) in ihrem ersten Zustand befindet; und
die zweite Durchflussregelvorrichtung (19), um zwischen ihrem ersten Zustand und ihrem zweiten Zustand derart zu wechseln, dass sich die zweite Durchflussregelvorrichtung (19) nur dann in ihrem zweiten Zustand befindet, wenn sich die erste Durchflussregelvorrichtung (15) in ihrem ersten Zustand befindet,
bis der von der Luftspeicherbaugruppe (7) bereitgestellte Druck unterhalb des vordefinierten Schwellenwerts für den Druck der Feststellbremse gefallen ist.

10. Bremssystem (5) nach Anspruch 9, wobei die Bremssystem-Steuereinheit (9) dazu konfiguriert ist, die erste Durchflussregelvorrichtung (15) und/oder die zweite Durchflussregelvorrichtung (19) zu steuern, um zwischen ihrem ersten Zustand und ihrem zweiten Zustand mit einer zunehmenden Wechselhäufigkeit zu wechseln.

11. Bremssystem (5) nach Anspruch 9 oder 10, wobei die Luftspeicherbaugruppe (7) umfasst:
mindestens einen ersten Luftbehälter (43), der mit der ersten Durchflussregelvorrichtung (15) über die erste Fluidleitung (25) verbunden ist; und
mindestens einen zweiten Luftbehälter (45), der mit der zweiten Durchflussregelvorrichtung (19) über die dritte Fluidleitung (29) verbunden ist.

12. Bremssystem (5) nach Anspruch 11, das mindestens eine vierte Durchflussregelvorrichtung (47) umfasst, die mit dem ersten Luftbehälter (43), mit dem zweiten Luftbehälter (45) und mit dem Feststellbremsen-Untersystem (23) verbunden ist, wobei die vierte Durchflussregelvorrichtung (47) dazu konfiguriert ist, dem Feststellbremsen-Untersystem (23) den höchsten Luftdruck eines durch den ersten Luftbehälter (43) bereitgestellten ersten Luftdrucks und eines durch den zweiten Luftbehälter (45) bereitgestellten zweiten Luftdrucks bereitzustellen.

13. Bremssystem (5) nach Anspruch 11 oder 12, das mindestens eine fünfte Durchflussregelvorrichtung (49a-b) umfasst, die dazu angeordnet ist, eine Luftströmung zwischen dem ersten Luftbehälter (43) und dem zweiten Luftbehälter (45) zu regeln, wobei die fünfte Durchflussregelvorrichtung (49a-b) dazu konfiguriert ist, eine Luftströmung zwischen dem ersten Luftbehälter (43) und dem zweiten Luftbehälter (45) als Reaktion darauf zu verhindern, dass mindestens einer eines durch den ersten Luftbehälter (43) bereitgestellten ersten Luftdrucks und eines durch den zweiten Luftbehälter (45) bereitgestellten zweiten Luftdrucks niedriger wird als ein vordefinierter Luftbehälterdruck.

14. Fahrzeug (1), umfassend:
Fahrzeugräder (3); und
das Bremssystem (5) nach einem der Ansprüche 9 bis 13, das dazu angeordnet ist, mindestens eines der Fahrzeugräder (3) zu bremsen.

15. Verfahren zum Betreiben eines Bremssystems (5) für ein Schwerlastfahrzeug (1), wobei das Bremssystem (5) eine Luftspeicherbaugruppe (7) zum Speichern von Druckluft für den Betrieb des Bremssystems (5); mindestens eine erste Luftbremskammer (13), die dazu konfiguriert ist, eine Betriebsbremse eines ersten Rads des Fahrzeugs (1) zu betätigen, wenn ein Luftdruck innerhalb der ersten Luftbremskammer (13) höher ist als ein vordefinierter Schwellenwert für den Druck der ersten Betriebsbremse; mindestens eine erste Durchflussregelvorrichtung (15), die mit der Luftspeicherbaugruppe (7) über eine erste Fluidleitung (25) verbunden ist und mit der ersten Luftbremskammer (13) über eine zweite Fluidleitung (27) verbunden ist; mindestens eine zweite Luftbremskammer (17), die dazu konfiguriert ist, eine Betriebsbremse eines zweiten Rads des Fahrzeugs (1) zu betätigen, wenn ein Luftdruck innerhalb der zweiten Luftbremskammer (17) höher ist als ein vordefinierter Schwellenwert für den Druck der zweiten Betriebsbremse; mindestens eine zweite Durchflussregelvorrichtung (19), die mit der Luftspeicherbaugruppe (7) über eine dritte Fluidleitung (29) verbunden ist und mit der zweiten Luftbremskammer (17) über eine vierte Fluidleitung (31) verbunden ist; ein Feststellbremsen-Untersystem (23), das mit der Luftspeicherbaugruppe (7) verbunden und dazu konfiguriert ist, von einem elektronischen Feststellbremssystem (11) gesteuert zu werden und mindestens ein Rad des Fahrzeugs (1) mit mindestens einer Feststellbremse automatisch zu bremsen, wenn ein von der Luftspeicherbaugruppe (7) bereitgestellter Luftdruck unterhalb eines vordefinierten Schwellenwerts für den Druck einer Feststellbremse fällt; und eine Bremssystem-Steuereinheit (9) umfasst, die mit der ersten Durchflussregelvorrichtung (15) und der zweiten Durchflussregelvorrichtung (19) gekoppelt ist, wobei das Verfahren Folgendes umfasst:
Steuern, durch die Bremssystem-Steuereinheit (9) als Reaktion auf einen Satz von Angaben, einschließlich einer Angabe über eine Störung des elektronischen Feststellbremssystems (11), einer Angabe über eine Feststellbremsanforderung und einer Angabe, dass das Fahrzeug (1) still steht, der ersten Durchflussregelvorrichtung (15), um zwischen ihrem ersten Zustand und ihrem zweiten Zustand derart zu wechseln, dass sich die zweite Durchflussregelvorrichtung (19) nur dann in ihrem zweiten Zustand befindet, wenn sich die erste Durchflussregelvorrichtung (15) in ihrem ersten Zustand befindet; und der zweiten Durchflussregelvorrichtung (19), um zwischen ihrem ersten Zustand und ihrem zweiten Zustand derart zu wechseln, dass sich die zweite Durchflussregelvorrichtung (19) nur dann in ihrem zweiten Zustand befindet, wenn sich die erste Durchflussregelvorrichtung (15) in ihrem ersten Zustand befindet, bis der von der Luftspeicherbaugruppe (7) bereitgestellte Druck unterhalb des vordefinierten Schwellenwerts für den Druck der Feststellbremse gefallen ist.

## Revendications

1. Système de freinage (5) pour véhicule poids-lourd (1), comprenant :
un système de réservoir d'air (7) destiné à stocker de l'air comprimé pour le fonctionnement du système de freinage (5) ;
au moins une première chambre de frein pneumatique (13) configurée pour engager un frein de service d'une première roue du véhicule (1) lorsqu'une pression d'air à l'intérieur de la première chambre de frein pneumatique (13) est supérieure à une première pression seuil de frein de service prédéfinie ;
au moins un premier dispositif de régulation de débit (15) relié au système de réservoir d'air (7) par l'intermédiaire d'une première conduit de fluide (25) et relié à la première chambre de frein pneumatique (13) par l'intermédiaire d'un deuxième conduit de fluide (27) ;
au moins une seconde chambre de frein pneumatique (17) configurée pour engager un frein de service d'une seconde roue du véhicule (1) lorsqu'une pression d'air à l'intérieur de la seconde chambre de frein pneumatique (17) est supérieure à une seconde pression seuil de frein de service prédéfinie ;
au moins un deuxième dispositif de régulation de débit (19) relié au système de réservoir d'air (7) par l'intermédiaire d'un troisième conduit de fluide (29) et relié à la seconde chambre de frein pneumatique (17) par l'intermédiaire d'un quatrième conduit de fluide (31) ;
au moins un troisième dispositif de régulation de débit (21) relié au premier dispositif de régulation de débit (15) par l'intermédiaire du deuxième conduit de fluide (27) et à la première chambre de freinage pneumatique (13) par l'intermédiaire d'un cinquième conduit de fluide (33) ;
un sous-système de frein de stationnement (23) connecté au système de réservoir d'air (7) et configuré pour être commandé par un système de frein de stationnement électronique (11), et pour appliquer automatiquement au moins un frein de stationnement sur au moins une roue du véhicule (1) lorsqu'une pression d'air fournie par le système de réservoir d'air (7) tombe en dessous d'une pression seuil de frein de stationnement prédéfinie ; et
une unité de commande de système de freinage (9) couplée au premier dispositif de régulation de débit (15), au deuxième dispositif de régulation de débit (19) et au troisième dispositif de régulation de débit (21), l'unité de commande de système de freinage (9) étant configurée pour commander, en réponse à un ensemble d'indications comprenant une indication de dysfonctionnement du système de frein de stationnement électronique (23), une indication d'une demande de frein de stationnement, et une indication que le véhicule est à l'arrêt, que le troisième dispositif de régulation de débit (21) empêche la pression à l'intérieur de la première chambre de frein pneumatique (13) de descendre en dessous de la première pression seuil de frein de service, et que chacun du premier dispositif de régulation de débit (15) et du deuxième dispositif de régulation de débit (19) permette à l'air provenant du système de réservoir d'air (7) d'être évacué du système de freinage (5), jusqu'à ce que la pression fournie par le système de réservoir d'air (7) tombe en dessous de la pression seuil prédéfinie du frein de stationnement.

2. Système de freinage (5) selon la revendication 1, dans lequel :
le premier dispositif de régulation de débit (15) peut être commandé entre un premier état dans lequel il permet à l'air de s'écouler du système de réservoir d'air (7) dans le deuxième conduit de fluide (27), et un second état dans lequel il permet à l'air du deuxième conduit de fluide (27) d'être évacué du système de freinage (5) ;
le deuxième dispositif de régulation de débit (19) peut être commandé entre un premier état dans lequel il permet le débit d'air du système de réservoir d'air (7) dans le quatrième conduit de fluide (31), et un second état dans lequel il permet à l'air du quatrième conduit de fluide (31) d'être évacué du système de freinage (5) ; et
l'unité de commande du boîtier de commande du système de freinage (9) est configurée pour commander que :
le premier dispositif de régulation de débit (15) alterne entre son premier état et son second état ; et
le deuxième dispositif de régulation de débit (19) alterne entre son premier état et son second état,
en permettant ainsi à l'air provenant du système de réservoir d'air (7) d'être évacué du système de freinage (5).

3. Système de freinage (5) selon la revendication 2, dans lequel l'unité de commande de système de freinage (9) est configurée pour commander que le deuxième dispositif de régulation de débit (19) alterne entre son premier état et son second état avec une fréquence d'alternance croissante.

4. Système de freinage (5) selon l'une quelconque des revendications 1 à 3, dans lequel le système de réservoir d'air (7) comprend :
au moins un premier réservoir d'air (43) relié au premier dispositif de régulation de débit (15) par l'intermédiaire du premier conduit de fluide (25) ; et
au moins un deuxième réservoir d'air (45) relié au deuxième dispositif de régulation de débit (19) par l'intermédiaire du troisième conduit de fluide (29).

5. Système de freinage (5) selon la revendication 4, comprenant au moins un quatrième dispositif de régulation de débit (47) connecté au premier réservoir d'air (43), au deuxième réservoir d'air (45) et au sous-système de frein de stationnement (23), le quatrième dispositif de régulation de débit (47) étant configuré pour fournir au sous-système de frein de stationnement (23) une pression d'air la plus élevée d'une première pression d'air fournie par le premier réservoir d'air (43) et une seconde pression d'air fournie par le deuxième réservoir d'air (45).

6. Système de freinage (5) selon la revendication 4 ou 5, comprenant au moins un cinquième dispositif de régulation de débit (49a-b) agencé pour commander un débit d'air entre le premier réservoir d'air (43) et le deuxième réservoir d'air (45), le cinquième dispositif de régulation de débit (49a-b) étant configuré pour empêcher le débit d'air entre le premier réservoir d'air (43) et le deuxième réservoir d'air (45) en réponse à au moins une pression d'air fournie par le premier réservoir d'air (43) et une seconde pression d'air fournie par le deuxième réservoir d'air (45) devenant inférieure à une pression de réservoir d'air prédéfinie.

7. Véhicule (1) comprenant :
des roues de véhicule (3) ; et
un système de freinage (5) selon l'une quelconque des revendications 1 à 6, agencé pour freiner au moins l'une des roues (3) du véhicule.

8. Procédé de fonctionnement d'un système de freinage (5) pour un véhicule poids-lourd (1), le système de freinage (5) comprenant un système de réservoir d'air (7) pour stocker de l'air comprimé pour le fonctionnement du système de freinage (5) ; au moins une première chambre de frein pneumatique (13) configurée pour engager un frein de service d'une première roue du véhicule (1) lorsqu'une pression d'air à l'intérieur de la première chambre de frein pneumatique (13) est supérieure à une pression seuil de frein de service prédéfinie ; au moins un premier dispositif de régulation de débit (15) relié au système de réservoir d'air (7) par l'intermédiaire d'une première conduit de fluide (25) et relié à la première chambre de frein pneumatique (13) par l'intermédiaire d'un deuxième conduit de fluide (27) ;au moins une seconde chambre de frein pneumatique (17) configurée pour engager un frein de service d'une seconde roue du véhicule (1) lorsqu'une pression d'air à l'intérieur de la seconde chambre de frein pneumatique (17) est supérieure à une seconde pression seuil de frein de service prédéfinie ; au moins un deuxième dispositif de régulation de débit (19) connecté au système de réservoir d'air (7) via une troisième conduit de fluide (29) et connecté à la seconde chambre de frein pneumatique (17) via un quatrième conduit de fluide (31) ; au moins un troisième dispositif de régulation de débit (21) relié au premier dispositif de régulation de débit (15) par l'intermédiaire du deuxième conduit de fluide (27) et à la première chambre de freinage pneumatique (13) par l'intermédiaire d'un cinquième conduit de fluide (33) ; un sous-système de frein de stationnement (23) relié au système de réservoir d'air (7) et configuré pour être commandé par un système de frein de stationnement électronique (11), et pour appliquer automatiquement au moins un frein de stationnement sur au moins une roue du véhicule (1) lorsqu'une pression d'air fournie par le système de réservoir d'air (7) tombe en dessous d'une pression seuil de frein de stationnement prédéfinie ; et une unité de commande de système de freinage (9) couplée au premier dispositif de régulation de débit (15), au deuxième dispositif de régulation de débit (19) et au troisième dispositif de régulation de débit (21), le procédé comprenant :
la commande (S2), par l'unité de commande de système de freinage (9), en réponse à un ensemble d'indications comprenant une indication de dysfonctionnement du système de frein de stationnement électronique (11), d'une indication de demande de frein de stationnement et d'une indication que le véhicule (1) est à l'arrêt, du troisième dispositif de régulation de débit (21) pour empêches la pression à l'intérieur de la première chambre de frein à air comprimé (13) de descendre en dessous de la première pression seuil de frein de service, et de chacun du premier dispositif de régulation de débit (15) et du deuxième dispositif de régulation de débit (19) pour permettre à l'air provenant du système de réservoir d'air (7) d'être évacué du système de freinage (5), jusqu'à ce que la pression fournie par le système de réservoir d'air (7) tombe en dessous de la pression seuil prédéfinie du frein de stationnement.

9. Système de freinage (5) pour véhicule poids-lourd, comprenant :
un système de réservoir d'air (7) destiné à stocker de l'air comprimé pour le fonctionnement du système de freinage ;
une première chambre de frein pneumatique (13) configurée pour engager un frein de service d'une première roue du véhicule (1) lorsqu'une pression d'air à l'intérieur de la première chambre de frein pneumatique (13) est supérieure à une première pression seuil de frein de service prédéfinie ;
un premier dispositif de régulation de débit (15) relié au système de réservoir d'air (7) par l'intermédiaire d'un premier conduit de fluide (25) et relié à la première chambre de frein pneumatique (13) par l'intermédiaire d'un deuxième conduit de fluide (27), le premier dispositif de régulation de débit (15) pouvant être commandé entre un premier état dans lequel il permet à l'air de s'écouler du système de réservoir d'air (7) dans le deuxième conduit de fluide (27), et un second état dans lequel il permet à l'air du deuxième conduit de fluide (27) d'être évacué du système de freinage (5) ;
une seconde chambre de frein pneumatique (17) configurée pour engager un frein de service d'une seconde roue du véhicule (1) lorsqu'une pression d'air à l'intérieur de la seconde chambre de frein pneumatique (17) est supérieure à une seconde pression seuil de frein de service prédéfinie ;
un deuxième dispositif de régulation de débit (19) relié au système de réservoir d'air (7) par l'intermédiaire d'un troisième conduit de fluide (29) et relié à la seconde chambre de frein pneumatique (17) par l'intermédiaire d'un quatrième conduit de fluide (31), le deuxième dispositif de régulation de débit (19) pouvant être commandé entre un premier état dans lequel il permet le débit d'air du système de réservoir d'air (7) dans le quatrième conduit de fluide (31), et un second état dans lequel il permet à l'air du quatrième conduit de fluide (31) d'être évacué du système de freinage (5) ;
un sous-système de frein de stationnement (23) connecté au système de réservoir d'air (7) et configuré pour être commandé par un système de frein de stationnement électronique (11), et pour appliquer automatiquement un frein de stationnement sur au moins une roue du véhicule (1) lorsqu'une pression d'air fournie par le système de réservoir d'air (7) tombe en dessous d'une pression seuil de frein de stationnement prédéfinie ; et
une unité de commande du système de freinage (9) couplée au premier dispositif de régulation de débit (15) et au deuxième dispositif de régulation de débit (19),
l'unité de commande du système de freinage (9) étant configurée pour commander, en réponse à un ensemble d'indications comprenant une indication de dysfonctionnement du système de frein de stationnement électronique (11), une indication de demande de frein de stationnement, et une indication que le véhicule (1) est à l'arrêt, que :
le premier dispositif de commande de débit (15) alterne entre son premier état et son second état, de telle sorte que le premier dispositif de commande de débit (15) ne soit dans son second état que lorsque le deuxième dispositif de commande de débit (19) est dans son premier état ; et que
le second dispositif de régulation de débit (19) alterne entre son premier état et son second état, de sorte que le deuxième dispositif de régulation de débit (19) ne se trouve dans son second état que lorsque le premier dispositif de régulation de débit (15) se trouve dans son premier état,
jusqu'à ce que la pression fournie par le système de réservoir d'air (7) tombe en dessous de la pression seuil de frein de stationnement prédéfinie.

10. Système de freinage (5) selon la revendication 9, dans lequel l'unité de commande de système de freinage (9) est configurée pour commander qu'au moins l'un du premier dispositif de régulation de débit (15) et du deuxième dispositif de régulation de débit (19) alterne entre son premier état et son second état avec une fréquence d'alternance croissante.

11. Système de freinage (5) selon la revendication 9 ou 10, dans lequel le système de réservoir d'air (7) comprend :
au moins un premier réservoir d'air (43) relié au premier dispositif de régulation de débit (15) par l'intermédiaire du premier conduit de fluide (25) ; et
au moins un deuxième réservoir d'air (45) relié au second dispositif de régulation de débit (19) par l'intermédiaire du troisième conduit de fluide (29).

12. Système de freinage (5) selon la revendication 11, comprenant au moins un quatrième dispositif de régulation de débit (47) connecté au premier réservoir d'air (43), au deuxième réservoir d'air (45) et au sous-système de frein de stationnement (23), le quatrième dispositif de régulation de débit (47) étant configuré pour fournir au sous-système de frein de stationnement (23) une pression d'air la plus élevée d'une première pression d'air fournie par le premier réservoir d'air (43) et une seconde pression d'air fournie par le deuxième réservoir d'air (45).

13. Système de freinage (5) selon la revendication 11 ou 12, comprenant au moins un cinquième dispositif de régulation de débit (49a-b) agencé pour commander un débit d'air entre le premier réservoir d'air (43) et le deuxième réservoir d'air (45), le cinquième dispositif de régulation de débit (49a-b) étant configuré pour empêcher le débit d'air entre le premier réservoir d'air (43) et le deuxième réservoir d'air (45) en réponse au fait qu'au moins une pression d'air fournie par le premier réservoir d'air (43) et une seconde pression d'air fournie par le deuxième réservoir d'air (45) devienne inférieure à une pression de réservoir d'air prédéfinie.

14. Véhicule (1) comprenant :
des roues de véhicule (3) ; et
un système de freinage (5) selon l'une quelconque des revendications 9 à 13, agencé pour freiner au moins l'une des roues (3) du véhicule.

15. Procédé de fonctionnement d'un système de freinage (5) pour un véhicule poids-lourd (1), le système de freinage (5) comprenant un système de réservoir d'air (7) pour stocker de l'air comprimé pour le fonctionnement du système de freinage (5) ; au moins une première chambre de frein pneumatique (13) configurée pour engager un frein de service d'une première roue du véhicule (1) lorsqu'une pression d'air à l'intérieur de la première chambre de frein pneumatique (13) est supérieure à une pression seuil de frein de service prédéfinie ; au moins un premier dispositif de régulation de débit (15) relié au système de réservoir d'air (7) par l'intermédiaire d'un premier conduit de fluide (25) et relié à la première chambre de frein pneumatique (13) par l'intermédiaire d'un deuxième conduit de fluide (27) ; au moins une seconde chambre de frein pneumatique (17) configurée pour engager un frein de service d'une seconde roue du véhicule (1) lorsqu'une pression d'air à l'intérieur de la seconde chambre de frein pneumatique (17) est supérieure à une seconde pression seuil de frein de service prédéfinie ; au moins un deuxième dispositif de régulation de débit (19) connecté au système de réservoir d'air (7) via un troisième conduit de fluide (29) et connecté à la seconde chambre de frein pneumatique (17) via un quatrième conduit de fluide (31) ; un sous-système de frein de stationnement (23) relié au système de réservoir d'air (7) et configuré pour être commandé par un système de frein de stationnement électronique (11), et pour appliquer automatiquement au moins un frein de stationnement sur au moins une roue du véhicule (1) lorsqu'une pression d'air fournie par le système de réservoir d'air (7) tombe en dessous d'une pression seuil de frein de stationnement prédéfinie ; et une unité de commande de système de freinage (9) couplée au premier dispositif de régulation de débit (15) et au deuxième dispositif de régulation de débit (19), le procédé comprenant les étapes consistant à :
commander, par l'unité de commande du système de freinage (9), en réponse à un ensemble d'indications comprenant une indication de dysfonctionnement du système de frein de stationnement électronique (11), une indication d'une demande de frein de stationnement, et une indication que le véhicule (1) est à l'arrêt, que le premier dispositif de régulation de débit (15) alterne entre son premier état et son second état, de sorte que le deuxième dispositif de régulation de débit (19) ne se trouve dans son second état que lorsque le premier dispositif de régulation de débit (15) se trouve dans son premier état ; et que le deuxième dispositif de régulation de débit (19) alterne entre son premier état et son second état, de sorte que le second dispositif de régulation de débit (19) ne se trouve dans son second état que lorsque le premier dispositif de régulation de débit (15) se trouve dans son premier état, jusqu'à ce que la pression fournie par le système de réservoir d'air (7) soit descendue en dessous de la pression seuil de frein de stationnement prédéfinie.
